(19) **Europäisches Patentamt**
**European Patent Office**
**Office européen des brevets**

(11) **EP 4 208 974 B1**

(12) **EUROPEAN PATENT SPECIFICATION**

(45) Date of publication and mention
of the grant of the patent:
**31.07.2024 Bulletin 2024/31**

(51) International Patent Classification (IPC):
*H04L 5/00* (2006.01)     *H04L 27/30* (2006.01)
*H04L 27/26* (2006.01)

(21) Application number: **21827455.3**

(52) Cooperative Patent Classification (CPC):
**H04L 5/0044; H04L 5/0046; H04L 27/2602;
H04L 27/30**

(22) Date of filing: **17.11.2021**

(86) International application number:
**PCT/US2021/059726**

(87) International publication number:
**WO 2022/109027 (27.05.2022 Gazette 2022/21)**

(54) **RESOURCE BLOCK-LEVEL INDEX MODULATION**

INDEXMODULATION AUF RESSOURCENBLOCKEBENE

MODULATION D'INDEX AU NIVEAU D'UN BLOC DE RESSOURCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2020 US 202063115840 P**

(43) Date of publication of application:
**12.07.2023 Bulletin 2023/28**

(73) Proprietor: **Google LLC
Mountain View, CA 94043 (US)**

(72) Inventors:
• **STAUFFER, Erik Richard
Mountain View, California 94043 (US)**
• **WANG, Jibing
Mountain View, California 94043 (US)**

(74) Representative: **Marks & Clerk GST
1 New York Street
Manchester M1 4HD (GB)**

(56) References cited:
• **BASAR ERTUGRUL ET AL: "Orthogonal
Frequency Division Multiplexing With Index
Modulation", IEEE TRANSACTIONS ON SIGNAL
PROCESSING, vol. 61, no. 22, 1 November 2013
(2013-11-01), USA, pages 5536 - 5549,
XP055897438, ISSN: 1053-587X, Retrieved from
the Internet
<URL:https://ieeexplore.ieee.org/stampPDF/get
PDF.jsp?tp=&arnumber=6587554&ref=aHR0cH
M6Ly9pZWVleHBsb3JlLmllZWUub3JnL2RvY3Vt
ZW50LzY1ODc1NTQ=> DOI:
10.1109/TSP.2013.2279771**
• **NUSENU SHADDRACK YAW ET AL:
"Space-Frequency Increment Index Modulation
Approach for Fifth Generation and Beyond
Wireless Communication Systems", IEEE
TRANSACTIONS ON VEHICULAR
TECHNOLOGY, IEEE, USA, vol. 69, no. 6, 2 April
2020 (2020-04-02), pages 6286 - 6298,
XP011794247, ISSN: 0018-9545, [retrieved on
20200617], DOI: 10.1109/TVT.2020.2984912**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**(Cont. next page)**

- **SOUJERI EBRAHIM ET AL: "Frequency Index Modulation for Low Complexity Low Energy Communication Networks", IEEE ACCESS, vol. 5, 3 June 2017 (2017-06-03), pages 23276 - 23287, XP055897494, Retrieved from the Internet <URL:https://ieeexplore.ieee.org/ielx7/6287639/7859429/07944538.pdf?tp=&arnumber=7944538&isnumber=7859429&ref=aHR0cHM6Ly9pZWVleHBsb3JlLmllZWUub3JnL2RvY3VtZW50Lzc5NDQ1Mzg=> DOI: 10.1109/ACCESS.2017.2713721**

**Description**

**BACKGROUND**

Various evolving wireless communication systems, such as fifth generation (5G) technologies and sixth generation (6G) technologies, provide network access for many types of devices and services. To enable network access, resources of a wireless network (*e.g.*, wireless spectrum) are partitioned and allocated among the devices connected to the wireless network. As more devices connect to the wireless network, spectral efficiency of the wireless network can become a critical factor in resource allocation. For example, in addition to user-centric types of devices (*e.g.*, smart phones), wireless networks are providing connectivity for increasing numbers of Internet-of-Things (IoT) devices. These IoT devices are often deployed in small areas by industrial, utility, or medical service providers on the scale of thousands of devices, which results in millions of IoT devices that can autonomously connect to and communicate over a wireless network. Oftentimes, the IoT devices communicate small amounts of data (*e.g.*, Massive Machine-Type Communications (mMTC)) at sporadic intervals. To communicate its data to a base station, each IoT device typically acquires an allocation of network resources from a base station to communicate its data. As such, the base station of a wireless network may be unable to efficiently allocate wireless network spectrum in a way that supports such a large number of small data transactions, particularly as IoT deployments scale and ever-increasing numbers of IoT devices (*e.g.*, millions of devices) connect to the wireless network.

BASAR ERTUGRUL ET AL, "Orthogonal Frequency Division Multiplexing With Index Modulation", IEEE TRANSACTIONS ON SIGNAL PROCESSING, USA, vol. 61, no. 22, doi: 10.1109/TSP.2013.2279771, describes an orthogonal frequency division multiplexing (OFDM) scheme, called OFDM with index modulation (OFDM-IM), for operation over frequency-selective and rapidly time-varying fading channels. S. Y. Nusenu, S. Huaizong, Y. Pan and A. Basit, "Space-Frequency Increment Index Modulation Approach for Fifth Generation and Beyond Wireless Communication Systems," in IEEE Transactions on Vehicular Technology, vol. 69, no. 6, pp. 6286-6298, June 2020, doi: 10.1109/TVT.2020.2984912 describes using the indices of activated transmit FDA antennas and their respective corresponding frequency increments $\Delta f$ to convey additional information bits. E. Soujeri, G. Kaddoum, M. Au and M. Herceg, "Frequency Index Modulation for Low Complexity Low Energy Communication Networks," in IEEE Access, vol. 5, pp. 23276-23287, 2017, doi: 10.1109/ACCESS.2017.2713721 describes a multi-user communication system based on frequency index modulation.

**SUMMARY**

This document describes techniques and apparatuses for resource block-level index modulation transmission and reception . In particular, the invention is defined appended claims 1-15.

The details of one or more implementations of resource block-level index modulation are set forth in the accompanying drawings and the following description. Other features and advantages will be apparent from the description, drawings, and claims. This summary is provided to introduce subject matter that is further described in the Detailed Description and Drawings. Accordingly, this summary should not be considered to describe essential features nor used to limit the scope of the claimed subject matter.

**BRIEF DESCRIPTION OF THE DRAWINGS**

The details of one or more aspects of resource block-level index modulation are described below. The use of the same reference numbers in different instances in the description and the figures indicate similar elements:

FIG. 1 illustrates an example operating environment in which various aspects of resource block-level index modulation can be implemented.
FIG. 2 illustrates an example device diagram of network entities that can implement various aspects of resource block-level index modulation.
FIG. 3 illustrates an example air interface resource that extends between user equipment and a base station and with which various aspects of resource block-level index modulation can be implemented.
FIG. 4 illustrates an example mapping graph of resource blocks that a base station can use to implement various aspects of resource block-level index modulation.
FIG. 5 illustrates an example resource block-level index modulation table implemented in accordance with one or more aspects.
FIG. 6 illustrates an example operating environment in which resource block-level index modulation can be implemented with multiple user equipment in accordance with various aspects.
FIG. 7 illustrates an example transaction diagram between various network entities that implement resource block-level index modulation.

FIG. 8 illustrates an example transaction diagram between a base station and multiple user equipment in accordance with one or more aspects.

FIG. 9 illustrates an example method for resource block-level index modulation.

FIG. 10 illustrates an example method for transmitting data to a user equipment with resource block-level index modulation.

FIG. 11 illustrates an example method for transmitting data to multiple user equipment with resource block-level index modulation.

FIG. 12 illustrates an example method for decoding a downlink communication that includes data modulated in accordance with aspects of resource block-level index modulation.

FIG. 13 illustrates an example method for implementing resource block-level index modulation with an uplink communication in accordance with one or more aspects.

**DETAILED DESCRIPTION**

This disclosure describes improvements in spectral efficiency for data communicated between a base station and user equipment (UE) in fifth generation new radio (5G NR), sixth generation (6G), or subsequent generations of wireless networks. Aspects of resource block-level index modulation (RBIM) are introduced, which enable a base station to convey data to user equipment by implementing modulation at a media access control layer (*e.g.*, scheduling layer) of a wireless link between the base station and the user equipment. A base station may include a resource block index modulator (RB index modulator) that uses resource block index locations at the scheduling layer to convey data in addition to signal constellation data modulated at a physical layer (PHY layer) of the wireless link. By so doing, the base station can convey the additional data to the UE without using additional time-frequency resources (*e.g.*, additional resource blocks) of a downlink channel. This may be useful by the base station to increase spectral efficiency of the wireless network when concurrently transmitting small amounts of data to a large number of UEs, such as to many IoT devices.

In contrast with preceding resource block scheduling, which uses bitmaps or formulas to schedule resource blocks, the aspects described herein enable a base station to convey data (*e.g.,* additional bits) to a UE by modulating index locations of at least one resource block of a downlink communication that includes data for the UE. In other words, the base station can convey a first portion of data to the UE in a resource block as a signal constellation and a second portion of the data by selecting an index location for the resource block. To do so, an RB index modulator of the base station may select or define an RBIM region of resource blocks for the UE and notify the UE of the RBIM region for use with subsequent downlink communications. The RB index modulator may then match, in accordance with the RBIM region, coded bits of signal constellation data with a resource block position at the scheduling layer (*e.g.*, media access control layer (MAC layer)) to convey additional ones of the coded bits. Thus, the index location of the resource block in which the signal constellation data is transmitted to the UE can indicate one or more additional bits of information to the UE.

As an example, consider an RBIM region of eight resource blocks (*e.g.*, consecutive RBs, non-consecutive RBs, distributed RBs, or an RB group (RBG)) in which a base station maps each resource block index location to a binary combination of bits. In this case, the RB index modulator can convey three additional bits for one resource block by selecting one of the eight available index locations of the RBIM region (*e.g.,* 000 to 111). Assume here that the base station implements binary signaling (*e.g.*, binary phase-shift keying (BPSK) or binary frequency-shift keying (BFSK), values of [0,1]) and the base station has four bits of data [1101] pending transmission to the UE. To do so, the RB index modulator selects an RB index location of the RBIM region that corresponds to [101] and sends the signal constellation for [1] in the RB index location for [101] to create a four-bit data message [1101] for the UE with RBIM. When the UE receives the downlink communication with the four-bit data message, the first bit [1] can be decoded by a decoder of the UE, and the three bits modulated with RBIM [101] can be decoded based on the RB index location of the signal constellation of the first bit to provide the data [1101] sent by the base station. Alternatively, if the corresponding RB index location is not available in a current slot, the RB index modulator may not use RBIM when transmitting the signal constellation to the UE. In some cases, the RB index modulator uses the physical downlink control channel (PDCCH) to indicate to the UE whether RBIM is enabled for a slot, subframe, or frame of air interface resources. Thus, UEs that support RBIM may use the modulation scheme intermittently, as directed by the base station using the PDCCH in either a same-slot physical downlink shared data channel (PDSCH), a later-slot PDSCH, or cross-slot PDSCH. These are but a few examples of resource block-level index modulation, others of which are described throughout the disclosure.

In aspects, a base station modulates a first portion of data for a UE to provide modulation symbols or signal constellations that correspond to the first portion of the data. The base station also selects, based on a value of a second portion of the data, respective index locations for one or more resource blocks by which to transmit the modulation symbols. The base station then transmits the modulation symbols to the UE using the one or more resource blocks having the respective index locations to convey the first portion of the data and the second portion of the data to the UE.

By so doing, the base station conveys the second portion of the data without using additional time-frequency resources of a downlink channel, which can be useful when concurrently transmitting small amounts of data to many UEs (*e.g.,* IoT devices).

While features and concepts of the described systems and methods for resource block-level index modulation can be implemented in any number of different environments, systems, devices, and/or various configurations, aspects of resource block-level index modulation are described in the context of the following example environments, devices, systems, and configurations.

**Example Environments**

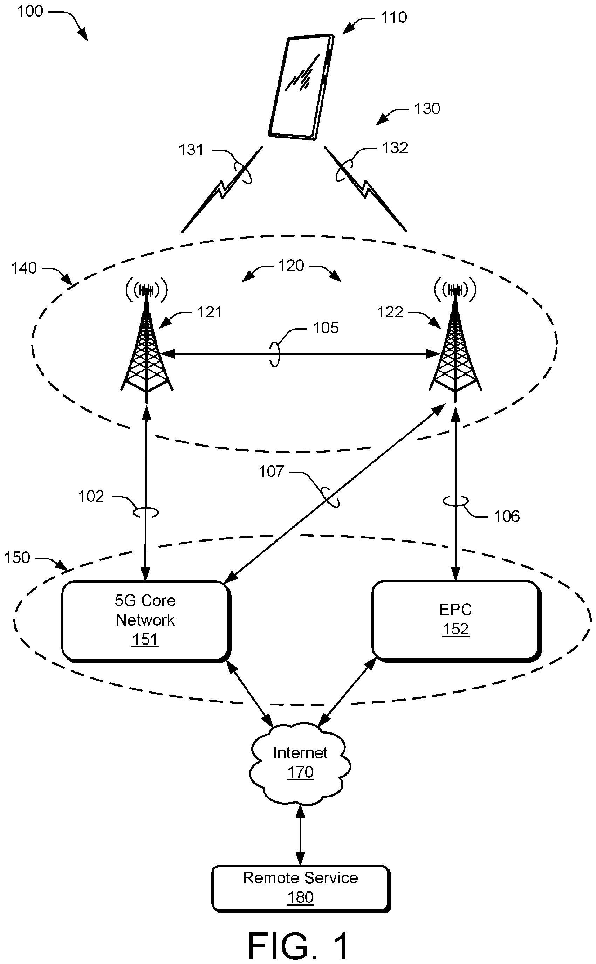

FIG. 1 illustrates an example environment 100, which includes a user equipment 110 (UE 110) that can communicate with one or more base stations 120 (illustrated as base stations 121 and 122) through one or more wireless communication links 130 (wireless links 130), illustrated as wireless links 131 and 132. In various aspects, the base stations 120 send respective data to one or more UEs 110 using resource block-level index modulation, which may improve spectral efficiency of a wireless network. For simplicity, the UE 110 is implemented as a smartphone but may be implemented as any suitable computing or electronic device, such as an Internet-of-Things (IoT) device that may include, by way of example, a sensor, a switch, a meter, a medical device, an actuator, or the like. Alternatively or additionally, the UE 110 may be implemented as a mobile communication device, modem, cellular phone, gaming device, navigation device, media device, laptop computer, desktop computer, tablet computer, smart appliance, or vehicle-based communication system. The base stations 120 (*e.g.,* an Evolved Universal Terrestrial Radio Access Network Node B, E-UTRAN Node B, evolved Node B, eNodeB, eNB, Next Generation Node B, gNode B, gNB, ng-eNB, or the like) may be implemented in a macrocell, microcell, small cell, picocell, distributed base station, and the like, or any combination thereof.

The base stations 120 communicate with the UE 110 using a wireless link 130, which may be implemented as any suitable type of wireless link. The wireless link 130 includes control-plane information and/or user-plane data, for example, downlink of user-plane data and control-plane information communicated from the base stations 120 to the UE 110, uplink of other user-plane data and control-plane information communicated from the UE 110 to the base station 120, or both. The wireless link 130 may include one or more wireless links (*e.g.,* radio links) or bearers implemented using any suitable communication protocol or standard, or combination of communication protocols or standards, such as Third Generation Partnership Project Long-Term Evolution (3GPP LTE), fifth generation New Radio (5GNR), and so forth. Multiple wireless links 130 may be aggregated in a carrier aggregation or multi-connectivity technology to provide a higher data-rate for the UE 110. Multiple wireless links 130 from multiple base stations 120 may be configured for Coordinated Multipoint (CoMP) communication with the UE 110.

The base stations 120 are collectively a Radio Access Network 140 (*e.g.,* RAN, Evolved Universal Terrestrial Radio Access Network, E-UTRAN, 5G NR RAN, NR RAN), where the RAN 140 communicates with one or more core networks 150 (core network 150). To illustrate, the base station 121 connects, at interface 102, to a 5G core network 151 (5GC 151) through an NG2 interface for control-plane signaling and using an NG3 interface for user-plane data communications. The base station 122 connects, at interface 106, to an Evolved Packet Core 152 (EPC 152) using an S1 interface for control-plane signaling and user-plane data communications. Alternatively or additionally, if the base station 122 connects to the 5GC 151 core network, the base station 122 connects to the 5GC 151 using an NG2 interface for control-plane signaling and through an NG3 interface for user-plane data communications, at interface 107. Accordingly, certain base stations 120 can communicate with multiple core networks 150 (*e.g.,* 5GC 151, EPC 152).

In addition to wireless links to core networks, the base stations 120 may communicate with each other. For example, the base stations 121 and 122 communicate through an Xn interface at interface 105 to coordinate apportioning or assigning air interface resources as further described.

The UE 110 may connect, through the 5G core network 151 or the Evolved Packet Core Network 152, to public networks, such as the Internet 170, to interact with a remote service 180. The remote service 180 represents the computing, communication, and storage resources used to provide any of a multitude of services, including sensing, metering, tracking, automation, control, interactive voice or video communication, file transfer, streaming audio, voice, or video, and other technical services implemented in any manner, for example, medical services, industrial automation, home automation, logistics tracking and management, IoT-related services, voice calls, video calls, website access, messaging services (*e.g.,* text messaging or multimedia messaging), photo file transfer, enterprise software applications, social media applications, video-gaming, streaming video or audio services, and podcasts.

**Example Devices**

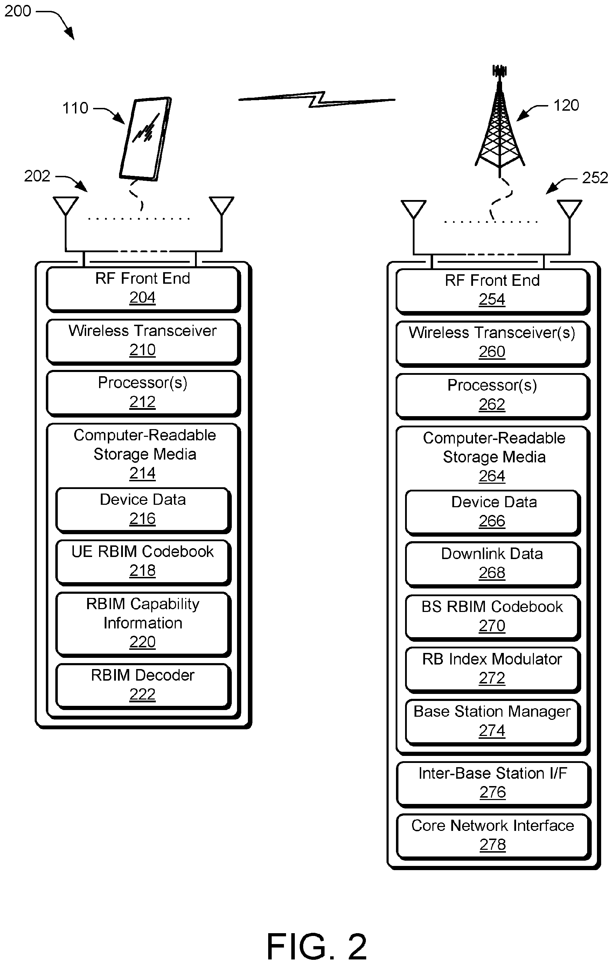

FIG. 2 illustrates an example device diagram 200 of the UE 110 and one of the base stations 120 that can implement various aspects of resource block-level index modulation in a wireless communication system. The UE 110 and/or the base station 120 may include additional functions and interfaces that are omitted from FIG. 2 for the sake of clarity.

The UE 110 includes antennas 202, a radio frequency front end 204 (RF front end 204), and a wireless transceiver 210 (*e.g.,* an LTE transceiver, a 5G NR transceiver, and/or a 6G transceiver) for communicating with the base station 120 in the RAN 140. The RF front end 204 of the UE 110 can couple or connect the wireless transceiver 210 to the antennas 202 to facilitate various types of wireless communication. The antennas 202 of the UE 110 may include an array of multiple antennas that are configured in a manner similar to or different from each other. The antennas 202 and the RF front end 204 can be tuned to, and/or be tunable to, one or more frequency bands defined by the 3GPP LTE, 5G NR, or 6G communication standards and implemented by the wireless transceiver 210. Additionally, the antennas 202, the RF front end 204, and/or the wireless transceiver 210 may be configured to support beamforming for the transmission and reception of communications with the base station 120. By way of example and not limitation, the antennas 202 and the RF front end 204 can be implemented for operation in sub-gigahertz (GHz) bands, sub-6 GHz bands, and/or above 6 GHz bands that are defined by the 3GPP LTE, 5G NR, or 6G communication standards.

The UE 110 also includes processor(s) 212 and computer-readable storage media 214 (CRM 214). The processor 212 may be a single-core processor or a multiple-core processor composed of a variety of materials, for example, silicon, polysilicon, high-K dielectric, copper, and so on. The computer-readable storage media described herein excludes propagating signals. CRM 214 may include any suitable memory or storage device such as random-access memory (RAM), static RAM (SRAM), dynamic RAM (DRAM), non-volatile RAM (NVRAM), read-only memory (ROM), or Flash memory useable to store device data 216 of the UE 110. The device data 216 include user data, sensor data, control data, automation data, multimedia data, beamforming codebooks, applications, and/or an operating system of the UE 110, some of which are executable by processor(s) 212 to enable user-plane data, control-plane information, and user interaction with the UE 110.

The CRM 214 of the UE 110 includes one or more UE resource block-level index modulation codebooks 218 (UE RBIM codebook 218), resource block-level index modulation capability information 220 (RBIM capability information 220), and a resource block-level index modulation decoder 222 (RBIM decoder 222). The RBIM decoder 222 may be implemented in whole or part as hardware logic or circuitry integrated with or separate from other components of the UE 110, for example, one of the wireless transceivers or a decoder of one of the wireless transceivers (*e.g.,* a turbo decoder, a polar decoder, or low-density parity-check decoder (LDPC)). Generally, the UE RBIM codebook 218 includes information that enables the UE 110 to encode or decode data or information based on index locations of one or more RBs scheduled for the UE in a downlink or uplink communication. To illustrate, a UE RBIM codebook 218 may define one or more RBIM regions in which the base station 120 schedules (*e.g.*, at the MAC layer) an RB of modulation symbols of data (*e.g.,* PHY layer data) to convey additional data to the UE 110 via an index location of the RB. Alternatively or additionally, the UE RBIM codebook 218 can be implemented as an RBIM table, RBIM index array, or other data structure of RBIM information useful to the UE 110 for decoding data from RBIM-enabled downlink communications. In aspects, the UE 110 may use any RBIM table or RBIM codebook to encode uplink communications to a base station 120 using an RBIM scheme as described herein.

The RBIM capability information 220 describes capabilities of the UE 110 with respect to implementing various aspects of RBIM. For example, the RBIM capability information 220 may indicate that the UE 110 is capable of decoding RBIM data from downlink communications, whether RBIM capabilities of the UE 110 are enabled, one or more UE RBIM codebooks 218 that are accessible by the UE 110, a currently selected UE RBIM codebook 218, a currently selected (*e.g.,* active) RBIM region, capabilities of the RBIM decoder 222, or the like. In some cases, the UE 110 uses one or more parameters of the RBIM capability information 220 to generate a user equipmentcapability-information information element (UE_CapabilityInformation IE) that indicates one or more capabilities of the UE specific to RBIM. As described herein, the UE 110 can transmit the UE_CapabilityInformation IE to a base station 120 to inform the base station of the RBIM capabilities of the UE. Alternatively or additionally, the UE 110 may also receive from the base station 120 a base station-capability-information information element (BS_CapabilityInformation IE) that indicates one or more capabilities of the BS specific to RBIM.

In aspects, the RBIM decoder 222 uses the UE RBIM codebook 218 of the UE 110 to decode RBIM data from downlink communications received by the UE. As noted, the RBIM decoder 222 may be implemented as part of another decoder (not shown) of the UE 110 or provide information useful to the other decoder for decoding data (*e.g.*, user information) from a physical downlink shared channel (PDSCH). For example, when the UE 110 receives an RBIM-enabled downlink communication, and an index location of an RB of user information is determined with RBIM based on coded bits of that user information, the UE 110 can use bits decoded from the RBIM in a decoder (*e.g.,* turbo, polar, or LDPC decoder) of the UE to assist in decoding the user information bits from PDSCH data of the RB. Other examples of RBIM aspects that a UE 110 can implement in a wireless communication system are further described herein.

The device diagram for the base station 120, shown in FIG. 2, includes a single network node (*e.g.,* a gNode B). The functionality of the base station 120 may be distributed across multiple network nodes or devices and may be distributed in any fashion suitable to perform the functions described herein. The nomenclature for this distributed base station functionality varies and includes terms such as Central Unit (CU), Distributed Unit (DU), Baseband Unit (BBU), Remote Radio Head (RRH), and/or Remote Radio Unit (RRU). The base station 120 includes antennas 252, a radio frequency front end 254 (RF front end 254), one or more wireless transceivers 260 (*e.g.,* one or more LTE transceivers, one or more 5G NR transceivers, and/or one or more 6G transceivers) for communicating with the UE 110. The RF front end 254 of the base station 120 can couple or connect the wireless transceivers 260 to the antennas 252 to facilitate various types of wireless communication. The antennas 252 of the base station 120 may include an array of multiple antennas that are configured in a manner similar to, or different from, each other. The antennas 252 and the RF front end 254 can be tuned to, and/or be tunable to, one or more frequency bands defined by the 3GPP LTE, 5GNR, and 6G communication standards and implemented by the wireless transceivers 260. Additionally, the antennas 252, the RF front end 254, the wireless transceivers 260 may be configured to support beamforming (*e.g.*, Massive multiple-input, multiple-output (Massive-MIMO)) for the transmission and reception of communications with the UE 110.

The base station 120 also includes processor(s) 262 and computer-readable storage media 264 (CRM 264). The processor 262 may be a single-core processor or a multiple-core processor composed of a variety of materials, for example, silicon, polysilicon, high-K dielectric, copper, and so on. CRM 264 may include any suitable memory or storage device such as random-access memory (RAM), static RAM (SRAM), dynamic RAM (DRAM), non-volatile RAM (NVRAM), read-only memory (ROM), or Flash memory useable to store device data 266 of the base station 120. The device data 266 include network scheduling data, radio resource management data, beamforming codebooks, applications, and/or an operating system of the base station 120, which are executable by processor(s) 262 to enable communication with the UE 110. CRM 264 may also include downlink data 268, which include respective data for transmission to one or more UEs 110 associated with the base station 120. Generally, the downlink data 268 include data in various stages of processing for transmission to the UE 110, for example, unstructured user data that the base station 120 prepares for transmission or pre-built data for transmission to the UE 110 via a PDSCH of a wireless link 130.

In aspects, the CRM 264 of the base station 120 also includes one or more base station RBIM codebooks 270 (BS RBIM codebook 270) and a resource block-level index modulator 272

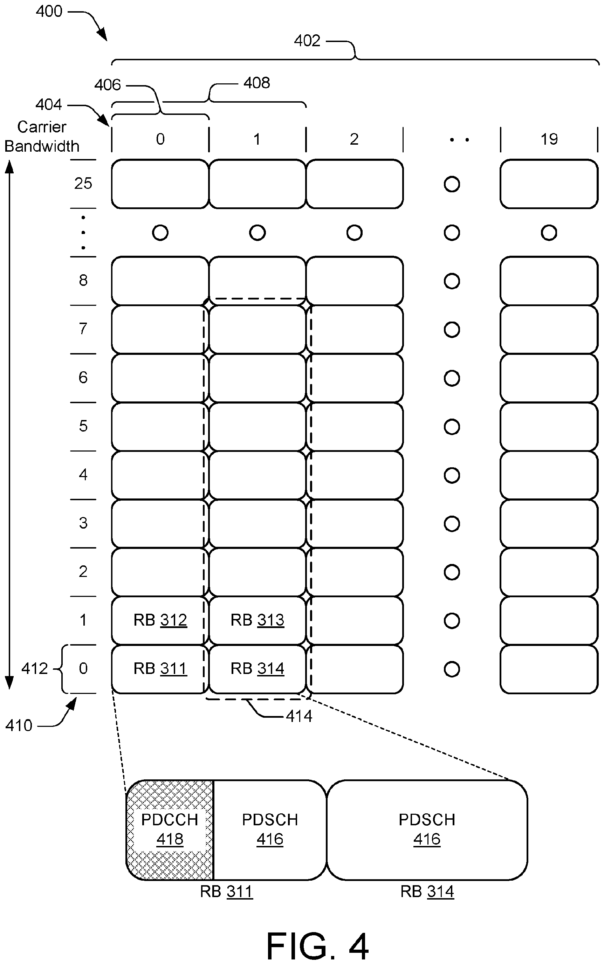

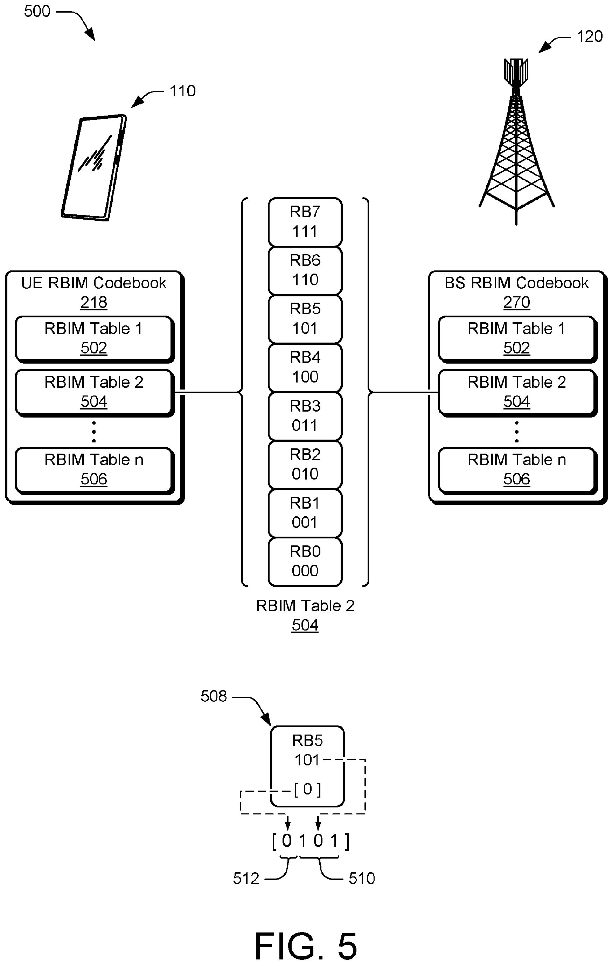

(RB index modulator 272). Generally, the base station 120 may include one or more BS RBIM codebooks 270 that are complementary to the UE RBIM codebooks 218 of the UEs 110 of the wireless network. In aspects, the base station 120 may also store and distribute the UE RBIM codebooks 218 to the UEs 110 to enable the UEs to implement aspects of RBIM. The BS RBIM codebook 270 includes information that enables the base station 120 to modulate or encode data based on the index locations of one or more RBs assigned to a UE 110 in a downlink communication or demodulate or decode data based on the index locations of one or more RBs from a UE 110 in an uplink communication. As described herein, a BS RBIM codebook 270 may define one or more RBIM regions in which the base station 120 may schedule (*e.g.*, at the MAC layer) modulation symbols or signal constellations of data (PHY layer data) for the UE to convey additional information or data to the UE 110. Alternatively or additionally, the BS RBIM codebook 270 can be implemented as an RBIM table, RBIM index array, or other data structure of information useful to the base station 120 for encoding RBIM-enabled downlink communications. Examples of RBIM regions and RBIM codebooks are further described herein, particularly with reference to FIG. 4 and FIG. 5.

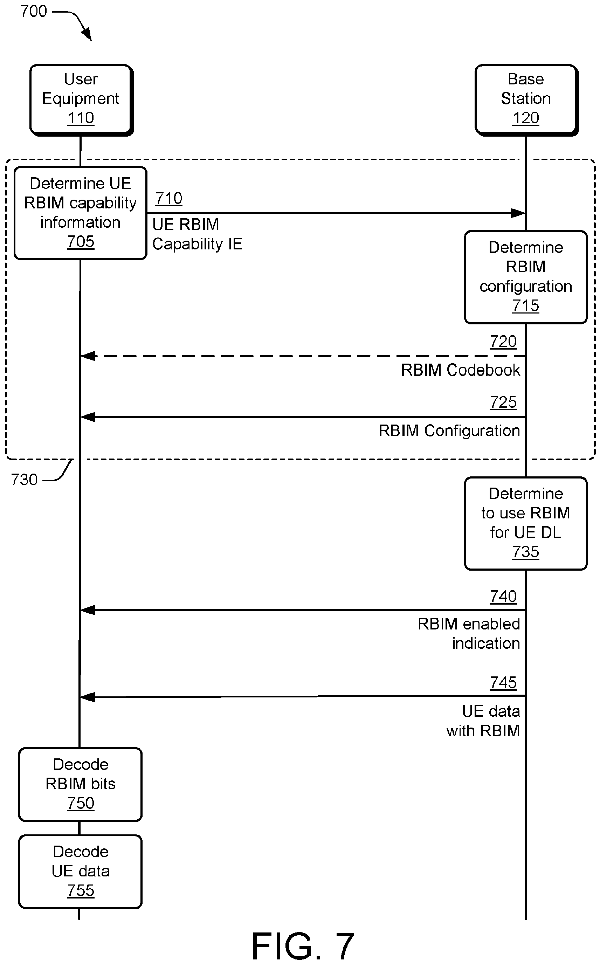

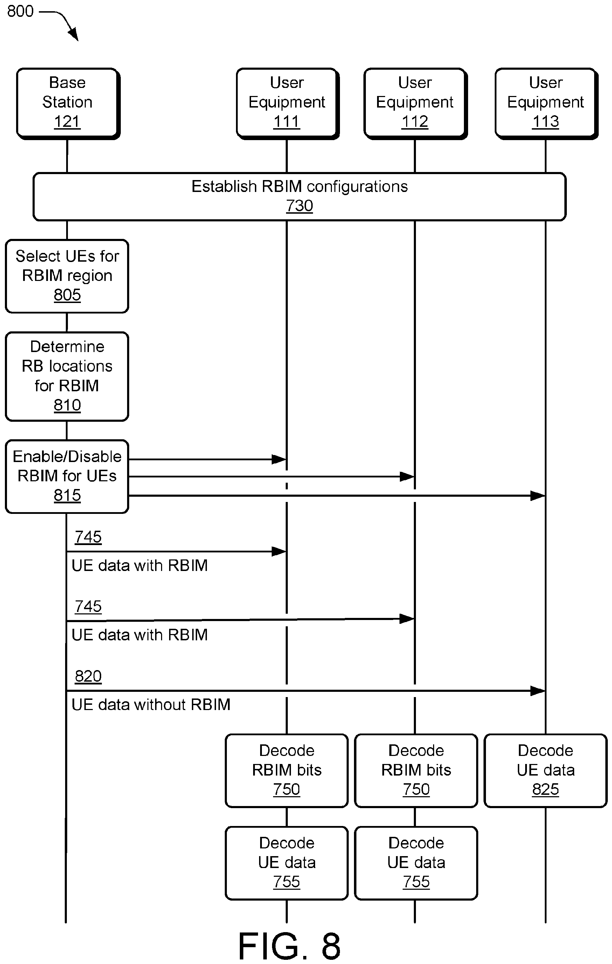

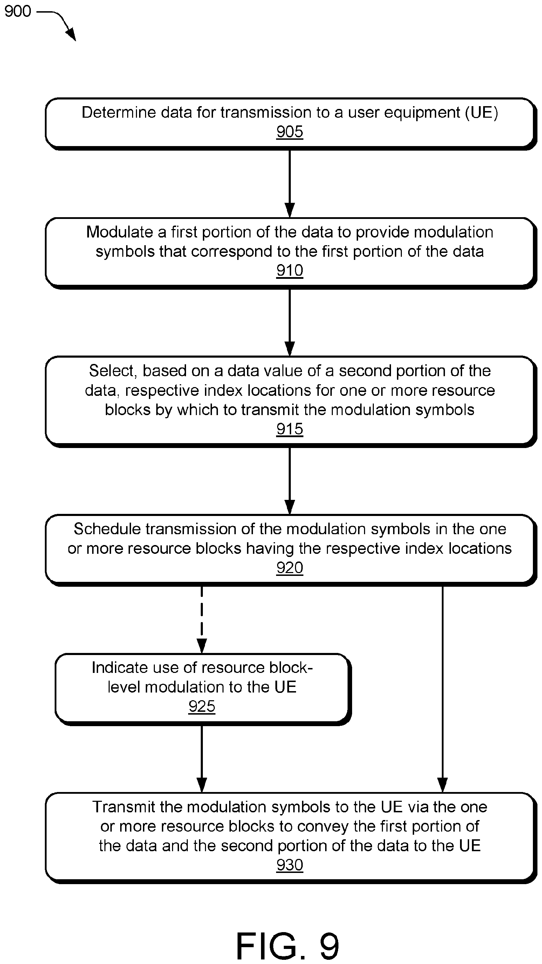

The RB index modulator 272 enables the base station 120 to implement various aspects of RBIM, examples of which include those illustrated and described with reference to the transaction diagrams of FIGs. 7 and 8 and the methods of FIGs. 9-11. Generally, the RB index modulator 272 can convey additional information bits to a UE 110 by modulating the additional information bits through the scheduling of index locations for RBs sent to the UE in a downlink communication. In other words, the index locations of the RBs scheduled by the RB index modulator or base station 120 are used to indicate a value of the additional bits to the UE 110. Alternatively or additionally, RBIM can also be used to convey additional information bits to the UE when a downlink PDSCH has been pre-built, such as to improve latency of downlink data to the UE. By so doing, the RB index modulator 272 can improve spectral efficiency of a wireless communication system, which may include a large number of UEs.

In aspects, the RB index modulator 272 can define an RBIM region for a UE 110 and send a notification to the UE 110 of the RBIM region to use for decoding RBIM-enabled downlink communications. The RBIM region may include a consecutive set of RBs, a distributed set of RBs, or be based on one or more resource block groups. In some cases, the RB index modulator 272 notifies or configures the UE 110 for RBIM through communication of one or more respective radio resource control messages (RRC messages). To illustrate, the RB index modulator 272 may assign an RB region to the UE 110 and notify the UE of an RBIM table (*e.g.,* of a UE RBIM codebook 218) to use for decoding information of RBIM-enabled downlink communications. Assuming that the base station 120 has a portion of data for the UE 110, the base station modulates a first portion of the data to provide modulation symbols (or signal constellations) that correspond to the first portion of the data. The RB index modulator 272 selects, based on a value of a second portion of the data and using a BS RBIM codebook 270, respective index locations for one or more resource blocks by which to transmit the modulation symbols. The base station 120 then transmits the modulation symbols to the UE 110 using the one or more resource blocks having the respective index locations to convey the first portion of the data and the second portion of the data to the UE. By so doing, the base station 120 conveys the second portion of the data without using additional time-frequency resources of a downlink channel (*e.g.*, wireless link 130), which can be useful when concurrently transmitting small amounts of data to many UEs (*e.g.,* IoT devices). These are but a few example aspects of RBIM that a base station can implement, others of which are further described herein.

The CRM 264 of the base station 120 also includes a base station manager 274, which may control various functionalities of the base station 120. Alternatively or additionally, the base station manager 274 may be implemented in whole or in part as hardware logic or circuitry integrated with, or separate from, other components of the base station 120. In at least some aspects, the base station manager 274 configures the wireless transceivers 260 for communication with the UE 110, as well as communication with a core network (*e.g.*, the core network 150). The base station 120 also includes an inter-base station interface 276, such as an Xn and/or X2 interface, which the base station manager configures to exchange user-plane data, control-plane information, and/or other data/information between other base stations, to manage the communication of the base station 120 with the UE 110. The base station 120 includes a core network interface 278 that the base station manager 274 configures to exchange user-plane data, control-plane information, and/or other data/information with core network functions and/or entities.

**Air Interface Resources**

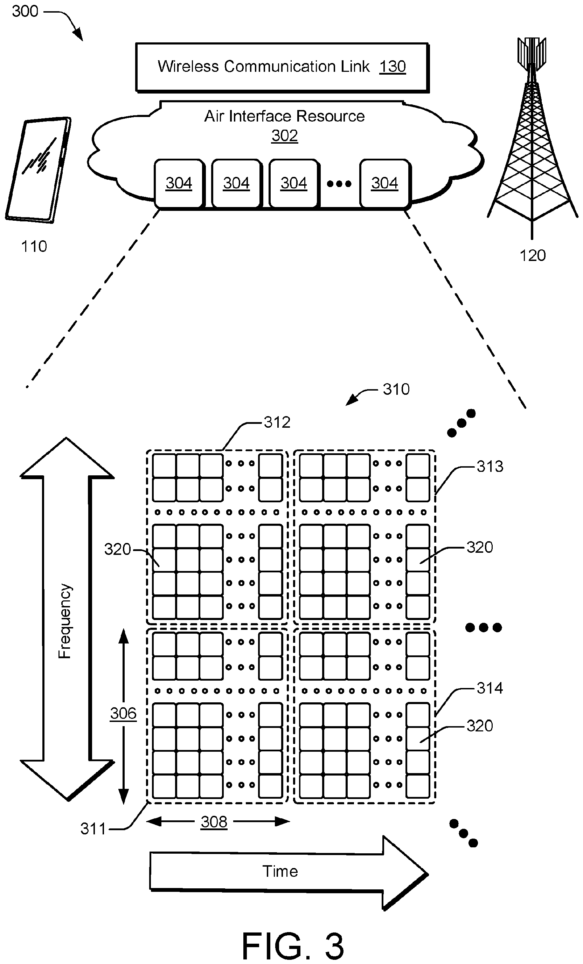

FIG. 3 illustrates at 300 an air interface resource that extends between a user equipment and a base station that can be used to implement various aspects of resource block-level index modulation. The air interface resource 302 can be divided into resource units 304, each of which occupies some intersection of frequency spectrum and elapsed time. A portion of the air interface resource 302 is illustrated graphically in a grid or matrix having multiple resource blocks 310, including example resource blocks 311, 312, 313, 314. An example of a resource unit 304, therefore, includes at least one resource block 310. As shown, time is depicted along the horizontal dimension as the abscissa axis, and frequency is depicted along the vertical dimension as the ordinate axis. The air interface resource 302, as defined by a given communication protocol or standard, may span any suitable specified frequency range and/or may be divided into intervals of any specified duration. Increments of time can correspond to, for example, milliseconds (mSec). Increments of frequency can correspond to, for example, megahertz (MHz).

In example operations generally, the base stations 120 allocate portions (*e.g.*, resource units 304) of the air interface resource 302 for uplink and downlink communications. Each resource block 310 of network access resources may be allocated to support respective wireless communication links 130 (wireless links 130) of multiple user equipment 110. In aspects, a base station 120 may schedule one or more resource blocks to a UE 110 in accordance with aspects of RBIM to convey information to the UE. Alternatively or additionally, the base station 120 may define an RBIM region for a UE 110 that includes any suitable number of resource blocks, such as described with reference to FIG. 4. These and other aspects of RBIM are described with reference to the examples of FIGs. 4-6, the transaction diagrams of FIGs. 7 and 8, and the methods of FIGs. 9-13. In the lower-left corner of the grid, the resource block 311 may span, as defined by a given communication protocol, a specified frequency range 306 and include multiple subcarriers or frequency sub-bands. The resource block 311 may include any suitable number of subcarriers (*e.g.*, 12) that each corresponds to a respective portion (*e.g.,* 15 kHz) of the specified frequency range 306 (*e.g.,* 180 kHz). The resource block 311 may also span, as defined by the given communication protocol, a specified time interval 308 or time slot (*e.g.,* lasting approximately one-half millisecond or 7 orthogonal frequency-division multiplexing (OFDM) symbols). The time interval 308 includes subintervals that may each correspond to a symbol, such as an OFDM symbol. As shown in FIG. 3, each resource block 310 may include multiple resource elements 320 (REs) that correspond to, or are defined by, a subcarrier of the frequency range 306 and a subinterval (or symbol) of the time interval 308. Alternatively, a given resource element 320 may span more than one frequency subcarrier or symbol. Thus, a resource unit 304 may include at least one resource block 310, at least one resource element 320, and so forth.

**Resource Block-Level Index Modulation**

FIG. 4 illustrates at 400 an example mapping graph of resource blocks that a base station can use to implement various aspects of resource block-level index modulation. In this example, the mapping graph (*e.g.*, resource-mapping graph) for a basic structure of a frame 402 is illustrated with each column 404 of the mapping graph representing one slot 406 in the 20-slot frame 402. Further, pairs of the slots 406 of the frame 402 may define or be grouped as subframes 408 of the frame 402, as shown in FIG. 4. In this example, the 20 slots of the frame 402, numbered 0 to 19, are occupied by and may correspond with resource block groups (RBGs) 1 to 20 of each slot 406 (*e.g.*, for a QPSK 10 MHz configuration). With respect to the vertical axis of the mapping graph, the resource block positions 410 correspond to a transmission bandwidth 412 of carrier bandwidth occupied by the resource blocks. Assume here that the transmission bandwidth is 10 MHz, the resource block size is 12, and the corresponding number of resource blocks across the carrier frequency of the mapping graph is 26, numbered 0 to 25. This configuration of frame 402 is but one example, and aspects of RBIM may be implemented using any suitable configuration of air interface resources and encompass various numerologies.

In aspects of resource block-level index modulation, the base station 120 or RB index modulator 272 may define RBIM regions (*e.g.*, RBIM region 414) of multiple RB index locations of a frame 402, slot 406, subframe 408, and/or bandwidth 412. An RBIM region of resource blocks may include consecutive sets of RBs or distributed sets of RBs. In some cases, the RB index modulator 272 forms or organizes an RB region based on a resource block group and may include all or a portion of RBs assigned to the resource block group. To illustrate, the example resource blocks 311, 312, 313, and 314 of FIG. 3 are shown in the context of the frame 402, which includes an example RBIM region 414. Here, the RBIM region 414 includes eight resource blocks of slot 1, which include RB 313 and RB 314. As described herein, the RB index modulator 272 can schedule one or more RBs for a UE 110 within the RB region 414 to convey information to the UE in addition to the data of signal constellations of the RBs. To illustrate, the RB index modulator 272 can schedule, based on a BS RBIM codebook 270, coded user data for a physical downlink shared channel 416 (PDSCH 416) of RB 314. The data may be coded using any suitable type of modulation (*e.g.*, at the PHY layer), such as binary phase-shift keying (BPSK), binary frequency-shift keying (BFSK), quadrature amplitude modulation (QAM), 16-state QAM (16QAM), 64-state QAM (64QAM), 256-state QAM (256QAM), and so on.

On reception, the UE 110 may decode additional information bits [000] based on the index location of the RB 314 by which the coded user data is sent to the UE. Alternatively or additionally, the RB index modulator 272 can indicate whether RBIM is being used or enabled for the downlink transmission by using a physical downlink control channel 418 (PDCCH 418). For example, not every UE may support RBIM, the base station 120 may determine that RBIM is not needed to transmit queued data to a UE, or the base station 120 may selectively direct a UE to intermittently use RBIM. In aspects, the base station 120 may use the PDCCH to selectively direct a UE to use RBIM to decode additional information from a same-slot PDSCH (*e.g.*, RB 311) or a later-slot/cross-slot PDSCH (*e.g.*, RB 311 to RB 314 or RB 313).

FIG. 5 illustrates at 500 an example resource block-level index modulation table implemented in accordance with one or more aspects. Generally, an RBIM codebook or an RBIM table enables network entities to implement respective RBIM operations, such as encoding additional information bits through RB index locations or decoding additional information bits based on the RB index locations. In this example, a UE 110 includes a UE RBIM codebook 218 with RBIM table 1 502, RBIM table 2 504, through RBIM table "n" 506, where "n" is any suitable integer. A base station 120 may also include a BS RBIM codebook 270 with RBIM table 1 502, RBIM table 2 504, through RBIM table "n" 506, where "n" is any suitable integer. The respective information of the UE RBIM codebook 218 and the BS RBIM codebook 270 may be similar or complementary, such that selection of corresponding codebooks 218/270 enables the base station 120 and UE 110 to implement aspects of RBIM. As described herein, the base station 120 and the UE 110 can agree on the bit values associated with each RB index location within an RBIM region or RB group. In some cases, the base station 120 and UE 110 communicate RRC messages to configure and select an RBIM codebook and/or RBIM region with which to implement RBIM operations. In the context of the present example, assume that the base station 120 has directed the UE 110 to select and use RBIM table 2 504 of the UE RBIM codebook 218 for RBIM-enabled downlink communications.

In aspects, the base station 120 and the UE 110 can agree on bit values associated with one or more respective RB locations or combinations of an RBIM region, such that the UE 110 is aware of a selected RBIM region (*e.g.*, within a frame of air interface resources) and RB index for the selected RB region. As shown in FIG. 5, the base station 120 implements RBIM table 2 504 for an RB region with eight RBs (*e.g.*, RB region 414) in which one RB is scheduled for the UE 110. Thus, the base station 120 can convey three additional bits of information, [000] though [111], by scheduling one RB for a corresponding one of the index locations of RB0 through RB7. In other words, if the base station 120 has one RB to transmit to the UE 110, then an additional 3 bits of the UE data can be transmitted by assigning the RB within the RBIM region based on the 3 bits of additional UE data (*e.g.*, the most-significant bits or least-significant bits of UE information bits or coded bits).

The base station 120 may use different RBIM regions, RBIM tables, and/or RBIM codebooks to convey different amounts of data to the UE 110. Generally, an amount of information that the base station 120 may convey to the UE 110 through RBIM may correspond with a number of RBs scheduled within an RB region of a given size. With reference to FIG. 5, the base station 120 conveys three additional bits of information, *e.g.*, [000] through [111], by scheduling one RB location within an RBIM region of eight RBs (*e.g.*, 8 RB location combinations). Similarly, the base station 120 and UE 110 can agree to use another RBIM table where each two-RB location/combination maps to a corresponding bit-value. In this case, the base station 120 can convey at least five bits of information, *e.g.*, [00000] through [11011], by scheduling the two RBs within the region of eight RBs (*e.g.*, 28 RB location combinations). Further, the base station 120 and UE 110 can agree to use yet another RBIM table where each three-RB location/combination maps to corresponding bit value. In this case, the base station 120 can convey at least six bits of information, *e.g.*, [000000] through [110111], by scheduling the three RBs within the region of eight RBs (*e.g.*, 56 RB location combinations). As such, the RB index modulator 272 or base station 120 may select and use an RBIM region, RBIM table, or RBIM codebook based on an amount of information pending transmission to a UE 110. By way of example, consider the equations below, which illustrate a number of different bit values that a base station 120 can convey to a UE 110 by implementing various aspects

of RBIM.

$$C(n,r) = C(RB\ region\ size, RBs) = C\left(\begin{array}{c} RB\ region\ size \\ RBs \end{array}\right) = \frac{RB\ region\ size!}{(RBs!\,(RB\ region\ size - RBs)!)}$$

*Equation 1: RBIM bit value combinations*

Generally, the number of different binary bit values that a base station 120 can convey to a UE 110 through RBIM may be based on a size of the RBIM region and a number of RBs scheduled for the UE 110 (e.g., RBIM region utilization). As shown in Equation 1, based on the Combinations formula for a number of combinations *C* given by a subset *r* (RBs) chosen from a set *n* (RBs of a region), the base station 120 may select a number of RBs (e.g., location/combinations) and/or a size of an RBIM region to convey differing amounts of information to the UE 110.

$$C\left(\begin{array}{c} RB\ region\ size = 8 \\ RBs = 1\ RB \end{array}\right) = \frac{8!}{(1!\,(8-1)!)} = 8\ different\ bit\ value\ combinations$$

*Equation 2: Example bit value combinations for an RBIM region of 8 RB selecting 1 RB*

In the context of FIG. 5 and as shown in Equation 2, by scheduling one RB within an RBIM region of eight RBs, the base station 120 can send eight different binary values (*e.g.,* 3 bits) to the UE 110. This is but one example of an RBIM configuration, others of which may be implemented by a base station 120 to convey any suitable number of bits to a UE 110 in accordance with aspects of RBIM.

As another example, consider RB 508, which includes binary signaling data in the context of RBIM table 2 504. In this case, the RB index modulator 272 can convey three additional bits with RB 508 by selecting, based on RBIM table 2 504, one of the eight available index locations of the RBIM region (*e.g.,* 000 to 111). Assume here that the base station 120 is using a binary signaling and the base station has four bits of data [0101] pending transmission to the UE. To do so, the RB index modulator selects the fifth RB index location (RB5) of the RBIM region that corresponds to bits [101] 510 and sends the signal constellation for binary signaling of [0] 512 in the RB index location for [101] to create a four-bit data message [0101] 510,512 for the UE 110. When the UE 110 receives the downlink communication with the four-bit data message, the first bit [0] 512 can be decoded by a PHY-layer decoder of the UE 110, and the three bits modulated with RBIM [101] 510 can be decoded based on the RB index location (RB5) of the signal constellation of the first bit to provide the data [0101] sent by the base station. In aspects, the base station 120 or RB index modulator may assign multiple UEs 110 to an RBIM region, enabling the base station 120 to convey additional information with RBIM to at least some of the multiple UEs 110 via the RBIM region of air interface resources. In this example, the RB index location value is appended to the decoded data value, but in other implementations the RB index location value can be prepended to the decoded data value.

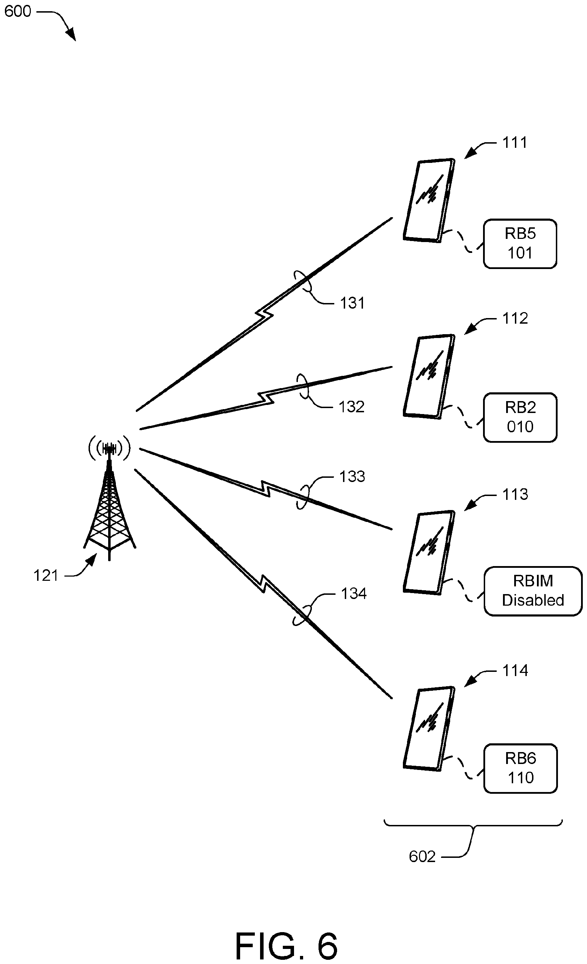

FIG. 6 illustrates an example operating environment 600 in which resource block-level index modulation can be implemented with multiple UEs in accordance with various aspects. Generally, the base station 120 (*e.g.,* base station 121) or RB index modulator 272 may assign multiple UEs 110 (*e.g.,* UE 111, UE 112, UE 113, and UE 114) to an RBIM region (*e.g.,* RBIM region 414). By so doing, the base station 120 may enable RBIM with at least some of the multiple UEs 110 during a frame, subframe, or slot of air interface resources to improve spectral efficiency of a wireless communication system. Although described with reference to multiple UEs 110, the aspects described in relation to FIG. 6 may be implemented additionally or alternatively with aspects described with reference to FIGs. 1-5, the transactions of FIGs. 7 and 8, and/or the methods of FIGs. 9-13.

In aspects, a base station 120 can group multiple UEs 110 to a same RBIM region *(e.g.,* RB group), such as when scheduling respective data for downlink communication to the multiple UEs 110. Each of the multiple UEs 110 may be assigned one or more RBs of the RBIM region, with a particular UE 110 being assigned a different RB than the RBs assigned to other UEs. For example, the multiple UEs 110 can be grouped such that respective additional information bits for each UE allow the base station 120 to schedule the multiple UEs on the same RBIM region (but on different respective RBs). In the example shown in FIG. 6, a base station 121 has selectively grouped UE 111, UE 112, UE 113, and UE 114 as an RBIM group 602 that is assigned to a same RBIM region (*e.g.,* RBIM region 414). Generally, the base station 121 communicates with the UEs 110 via one of the respective wireless links 131, 132, 133, and 134, through which downlink communications are transmitted to the UEs. Assume here that the base station 120 has also configured the UE 111, UE 112, UE 113, and UE 114 to use RBIM table 2 504 as described with reference to FIG. 5. In other cases, the base station 120 may assign different RBIM codebooks or RBIM tables to UEs 110 of an RBIM group or assigned to a same RBIM region, which may enable some additional information to be conveyed using two different RB index locations of an RBIM region.

In aspects, the base station 120 or RB index modulator 272 schedules respective RBs to one or more of the multiple UEs 110 using specific RB index locations based on additional information bits to send to the multiple UEs. The base station 120 may also mix RBIM-enabled downlink communications with non-RBIM-enabled downlink communications. For example, a UE 110 may not have additional information pending transmission, or the base station 120 may not be able to use a specific RB index location of an RBIM region needed to convey the additional information. In the context of the present example, assume that the base station 120 is able to schedule RB index locations to convey respective additional information for UE 111, UE 112, and UE 114, but is unable to schedule a desired RB index location for additional information of UE 113. In this case, the base station 120 mixes the RB-enabled communications to UE 111, UE 112, and UE 114 with a non-RB-enabled communication to UE 113. As shown in FIG. 6, the base station 120 conveys additional bits of information [101], [010], and [110] to UE 111, UE 112, and UE 114 by using different RB index locations, RB5, RB2, and RB6, respectively.

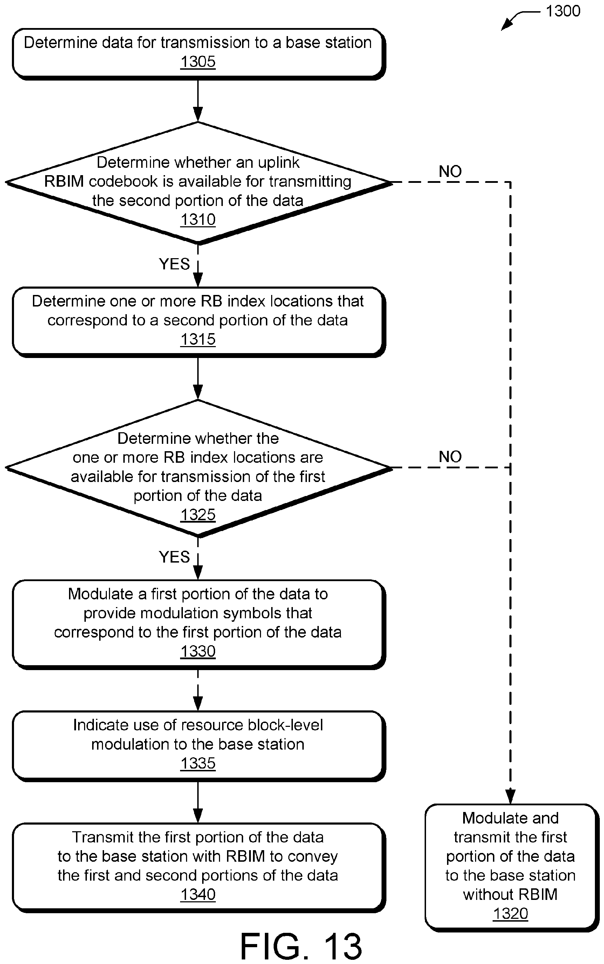

Alternatively or additionally, a UE (*e.g.,* UE 110) may implement aspects of resource block-level index modulation as described with reference to FIGs. 1-6, the operations as described with reference to FIGs. 7 and 8, and/or the methods as described with reference to FIGs. 9-13. For example, a UE may include an instance of an RB index modulator that enables the UE to implement RBIM for uplink communications to a base station. In aspects, the UE or RB index modulator of the UE schedules one or more RBs of uplink data for a base station using specific RB index locations based on additional information bits to send to the base station. In some cases, the UE or RB index modulator of the UE uses an RBIM codebook or RBIM table assigned to the UE by the base station. Optionally, the UE may indicate to the base station that an uplink communication is encoded using RBIM via a PUCCH of the wireless link between the UE and the base station. By using RBIM on an uplink communication, the UE may improve spectral efficiency of a wireless network in which the UE and base station communicate. Additional aspects of implementing RBIM with uplink communications are also described in reference to a method of FIG. 13.

## Resource Block-Level Index Modulation Operations

FIGs. 7 and 8 illustrate example control and data signaling diagrams 700 and 800, respectively. The diagrams 700 and 800 illustrate example signals between various network entities, such as the UE 110 and the base station 120 in accordance with various aspects of resource block-level index modulation. The UE 110, the base station 120, and the RB index modulator 272 may be implemented using any combination of aspects described with reference to FIGs. 1-6 or FIGs. 9-13.

A first example of control and data signaling for resource block-level index modulation is illustrated by the transaction diagram 700 of FIG. 7. In the diagram 700, a base station 120 may configure the UE 110 for RBIM operations and transmit a portion of data modulated with RBIM to the UE. By so doing, the base station may convey an increased amount of data or information to the UE without consuming additional air interface resources, which can be useful for efficiently transmitting small amounts of data to a large number of UEs (*e.g.*, improved spectral efficiency).

At 705, a UE determines RBIM capability information of the UE. The RBIM capability information may include a currently selected RBIM table or RBIM codebook for use in decoding RBIM-enabled downlink communications. In some cases, the UE determines that the UE does not have an RBIM codebook or that a local copy of an RBIM codebook has been deprecated. In such cases, the UE may determine to request an RBIM codebook from a base station or access a remote source to obtain an RBIM codebook.

At 710, the UE transmits an indication of the UE's RBIM capability information to a base station. In some cases, the UE transmits an indication of RBIM specific capabilities of the UE, which may include an indication of an RBIM codebook or RBIM table accessible by the UE. In this example, the UE transmits an indication of UE RBIM capabilities as a user equipment-capabilityinformation information element (UE_CapabilityInformation IE) that indicates one or more capabilities specific to RBIM. In aspects, the UE and base station communicate indications of the UE's RBIM capability information and/or UE configuration information via respective RRC messages.

At 715, the base station determines an RBIM configuration for the UE. The RBIM configuration of the UE may include assignment to an RBIM group of UEs, an RBIM region to which the UE is assigned, an RBIM codebook or RBIM table to use for decoding RBIM-enabled communications, or the like. Optionally at 720, the base station sends an RBIM codebook to the UE. For example, when the base station selects to use an RBIM codebook or RBIM table that is not accessible to the UE, the base station may send a UE RBIM codebook to the UE for use in subsequent RBIM operations. At 725, the base station transmits an indication of the RBIM configuration to the UE. As noted, the base station may transmit the indication of the RBIM configuration or configuration parameters to the base station using one or more RRC messages. Generally, the one or more of the operations 705, 710, 715, 720, and/or 725 may correspond to a sub-diagram 730 in which the UE and base station communicate to establish an RBIM configuration for subsequent RBIM-related transactions.

At 735, the base station determines to use RBIM for a downlink communication to the UE. Generally, the base station can schedule RBIM dynamically (*e.g.*, on a slot-by-slot or subframe-by-subframe basis), for example, when additional information is pending transmission to the UE and/or a corresponding RB index location is available to convey the additional information to the UE. When additional coded bits are pending transmission to the UE, the base station may determine that a corresponding RB index location is available to convey the additional coded bits to the UE. For example, the base station may query an RBIM table to determine, based on a value of the coded bits, which RB index location of an RBIM region corresponds to the additional coded bits. Responsive to determining that the RB index location is available for scheduling an RB for the UE, the base station may determine to use RBIM for a downlink communication to the UE. Alternatively, if the RB index location that corresponds to the additional bits is not available for scheduling an RB for the UE, the base station may determine not to use RBIM for the downlink communication to the UE.

At 740, the base station transmits an indication that RBIM is enabled for the downlink communication to the UE. As noted, the base station can schedule RBIM dynamically on a slot-by-slot or subframe-by-subframe basis to transmit information to the UE using the scheduling or MAC layer. When RBIM is enabled or used with a downlink communication to a UE, the base station can indicate to the UE that RBIM is being used via the PDCCH. For example, the base station may use a predefined bit in the PDCCH to indicate whether RBIM is enabled with an RBIM region for a corresponding PDSCH, such that UE can use an RB index location in the PDSCH to extract the additional information bits when the RBIM scheme is used.

At 745, the base station transmits data for the UE with RBIM. In aspects, the base station modulates a first portion of the data (*e.g.,* first coded bits, MSB bits, or LSB bits) as modulation symbols or signal constellations at a PHY layer of a wireless link between the base station and the UE. To implement RBIM, the base station modulates a second portion of the data (*e.g.*, second coded bits, LSB bits, or MSB bits) by selecting respective index locations for one or more resource blocks based on a data value of the second portion of the data. The base station then schedules the first portion of the data for transmission to the UE using the respective index locations of the RBs to modulate the second portion of the data at a scheduling or MAC layer of the wireless link. As such, the RBIM-enabled downlink transmission to the UE includes the first portion of data modulated at the PHY layer and the second portion of data modulated with RBIM at the scheduling or MAC layer.

At 750, the UE decodes the RBIM modulated bits from the downlink communication. Based on respective index locations of one or more RBs scheduled for the UE, the UE decodes the RBIM modulated bits from the downlink communication. In aspects, the UE determines the bit values associated with the respective index locations of the RBs in which PHY layer data is sent to the UE by using an RBIM table or RBIM codebook. At 755, the UE decodes the data from the one or more resource blocks of the downlink communication. When RBIM is used, and the index locations of the one or more RBs are based on coded bits of the UE data, then the UE can use those coded bits in the decoder of the UE to assist in decoding the UE data bits from PDSCH.

Another example of control and data signaling for resource block-level index modulation is illustrated by the transaction diagram 800 of FIG. 8. In the diagram 800, a base station 121 communicates RBIM-enabled downlink data to UEs 111 and 112 and communicates non-RBIM-enabled downlink data to another UE 113. By so doing, the base station may convey an increased amount of data or information to at least two UEs of an RBIM region, which can be useful to increase spectral efficiency when transmitting small amounts of data to multiple UEs (*e.g.*, deployments of IoT devices).

At 730, the base station establishes RBIM configurations for multiple UEs with which the base station communicates over respective wireless links. As described with reference to FIG. 7, the base station may receive RBIM capability information from the UEs and send each of the UEs an RBIM configured to use for implementing RBIM operations. In some cases, the base station implements the operations of 730 by communicating one or more RRC messages with the UEs to establish the RBIM configurations (*e.g.*, RBIM region and RBIM table settings for a UE). As shown in FIG. 8, the base station 121 establishes RBIM configurations for the UE 111, UE 112, and UE 113.

At 805, the base station selects a subset of the multiple UEs for an RBIM region. The base station may select the subset of UEs based on respective data pending transmission to the UEs. For example, the base station may select a subset of UEs with different combinations of coded bits pending transmission (*e.g.*, [101], [010] and [011]), such that corresponding index locations in the RBIM region are available to use RBIM with one or more of the multiple UEs. Alternatively or additionally, the base station may reselect the UEs for the RBIM region dynamically, such as on a slot basis, subframe basis, or frame basis.

At 810, the base station determines RB index locations (*e.g.*, RB positions) that correspond to respective data to send to the multiple UEs. The base station may determine the RB index locations based on bit values of the data and an RBIM table or RBIM codebook that maps bit values to corresponding RB index locations/combinations. When the base station does not have additional data to send the UE, the base station may schedule an RB for that UE in any unoccupied RB of the RB region (*e.g.,* after scheduling RBIM-enabled downlink communications) or in an RB outside of the RB region. After determining respective RB index locations by which to transmit data to the multiple UEs, the base station may schedule signal constellations or modulation symbols in the respective RB index locations for transmission to at least some of the multiple UEs. In the context of the present example, assume that the base station is able to schedule index locations that correspond with additional coded bits for UE 111 and UE 112 but not UE 113 due to a scheduling conflict with another UE (*e.g.*, UE 111 and UE 113 have same additional coded bits [101]).

At 815, the base station enables or disables RBIM for the multiple UEs. In some cases, the base station sends an indication to a UE that RBIM is enabled for the downlink communication to the UE. As noted, the base station can schedule RBIM dynamically on a slot-by-slot or subframe-by-subframe basis to transmit information to the UE using the scheduling or MAC layer. When RBIM is enabled or used with a downlink communication to a UE, the base station can use the PDCCH to indicate to the UE that RBIM is being used. When RBIM is disabled for a UE, the base station may send an implicit or explicit indication that RBIM is not used for the downlink communication. Alternatively or additionally, the base station may schedule non-RBIM-enabled communications outside of the RBIM region effective to indicate to the UE that the downlink communication is not using RBIM. In the present example, the base station 121 sends indications to UE 111 and UE 112 in the PDCCH, indicating that RBIM is enabled for the respective RBs in the PDSCH.

At 745, the base station transmits data to the UEs with RBIM, such as described with reference to FIG. 7. For example, the base station modulates a first portion of the data as modulation symbols or signal constellations at a PHY layer and modulates a second portion of the data (*e.g.,* second coded bits, LSB bits, or MSB bits) by selecting respective index locations for one or more resource blocks based on a bit value (*e.g.*, coded bits) of the second portion of the data. As shown in FIG. 8, the base station 121 transmits data to UE 111 and UE 112 using RBIM to convey additional information to those UEs. At 820, the base station transmits data to another UE without RBIM. As noted, the base station may not have additional information pending transmission to the UE, or the base station may not be able to obtain a corresponding RB index location to convey additional information to the UE with RBIM. Here, the base station 121 sends a downlink communication to the UE 113 without using RBIM because the corresponding RB index location was not available in the RB region.

At 750, some of the multiple UEs decode RBIM modulated bits from the respective downlink communications. Based on respective index locations of one or more RBs scheduled for a UE, the UE decodes the RBIM modulated bits from its downlink communication. The UE can determine the bit values associated with the respective index locations of the RBs in which PHY layer data is sent to the UE by using an RBIM table or RBIM codebook. As shown in FIG. 7, the UE 111 and UE 112 decode RBIM bits from respective downlink communications received from the base station 121. At 755, some of the multiple UEs decode data from the one or more resource blocks of the respective downlink communication. When RBIM is used, and the index locations of the one or more RBs are based on coded bits of the UE data, the UE can use those coded bits in its decoder to assist in decoding the UE data bits from PDSCH. For example, the RBIM bits may include one or more error-correcting code (ECC) bits or cyclic redundancy error check (CRC) bits that correspond to the coded bits of UE data in the RB. At 825, at least one of the multiple UEs decodes UE data that was sent without RBIM. Concluding the present example, the UE 111 and UE 112 may use at least a portion of the RBIM bits to decode the UE data received at each UE via the respective downlink communications. The UE 113, which received data without RBIM, uses a decoder to decode the data from the modulation symbols of the downlink communication.

### Example Methods for Resource Block-Level Index Modulation

Example methods 900, 1000, 1100, 1200, and 1300 are described with reference to FIGs. 9-13 in accordance with one or more aspects of resource block-level index modulation. In some aspects, operations of the methods 900, 1000, 1100, 1200, and/or 1300 are performed by a base station or user equipment, such as the UE 110 or base station 120 described with reference to FIGs. 1-8.

FIG. 9 illustrates example method 900 for resource block-level index modulation (RBIM) as generally related to transmitting data to one or more UEs. In aspects, a base station (*e.g.*, base station 120) can use RBIM to convey, in addition to PHY layer-encoded data, bits of information to a UE (*e.g.,* UE 110) using the scheduling layer or MAC layer of an air interface. By so doing, the base station may improve spectral efficiency of a wireless communication, for example, when transmitting small amounts of data to a large number of UEs (*e.g.*, thousands of IoT devices).

At 905, a base station (*e.g.*, base station 121) determines data for transmission to a UE (*e.g.,* UE 111, UE 112, UE 113, or UE 114). The base station may process, queue, or buffer data pending transmission to the UE. For example, the base station can encode user data to provide coded bits of data for transmission to the UE. In some cases, the data include coded bits that form a codeword of data or information that is intended for transmission to the UE.

At 910, the base station modulates a first portion of the data to provide modulation symbols that correspond to the first portion of the data. In some cases, the base station modulates a first number of coded bits that are pending transmission to the UE. Generally, the base station modulates the first portion of data at the PHY layer as modulation symbols or signal constellations. The base station may use any suitable type of modulation to modulate the first portion of the data, such as BPSK, BFSK, QAM, 16QAM, 64QAM, 256QAM, 1024QAM, and so forth.

At 915, the base station selects, based on a data value of a second portion of the data, respective index locations for one or more resource blocks by which to transmit the modulation symbols. In other words, the base station can modulate coded bits of the second portion of the data by selecting index locations that correspond to the coded bits, such as based on an RBIM codebook or RBIM table as described with reference to FIG. 5.

At 920, the base station schedules transmission of the modulation symbols in the one or more resource blocks having the respective index locations. Based on the selection of the respective index locations, the base station may determine if the respective index locations are available to use for transmitting the modulation symbols to the UE. When the base station implements RBIM for multiple UEs with a same RBIM region, the base station may disable RBIM for one or more of the multiple UEs due to scheduling conflicts for a same index location selected in accordance with RBIM.

Optionally at 925, the base station indicates use of resource block-level index modulation to the UE. The base station may transmit an indication to the UE that the respective index locations of the one or more resource blocks are used to modulate the second portion of the data. In some cases, the base station transmits the indication to the UE using the PDCCH of a wireless link between the base station and the UE.

At 930, the base station transmits the modulation symbols to the UE using the one or more resource blocks to convey the first portion of the data and the second portion of the data to the UE. Generally, the modulation symbols or signal constellations of the one or more RBs convey the first portion of data or coded bits via the PHY layer of the wireless link between the base station and the UE. By using RBIM, the index locations of the one or more RBs convey the second portion of data or coded bits via the scheduling layer or MAC layer of the wireless link. As such, the base station conveys additional bits of information or data to the UE without consuming additional air interface resources at the PHY layer, which can improve spectral efficiency of the wireless communication system.

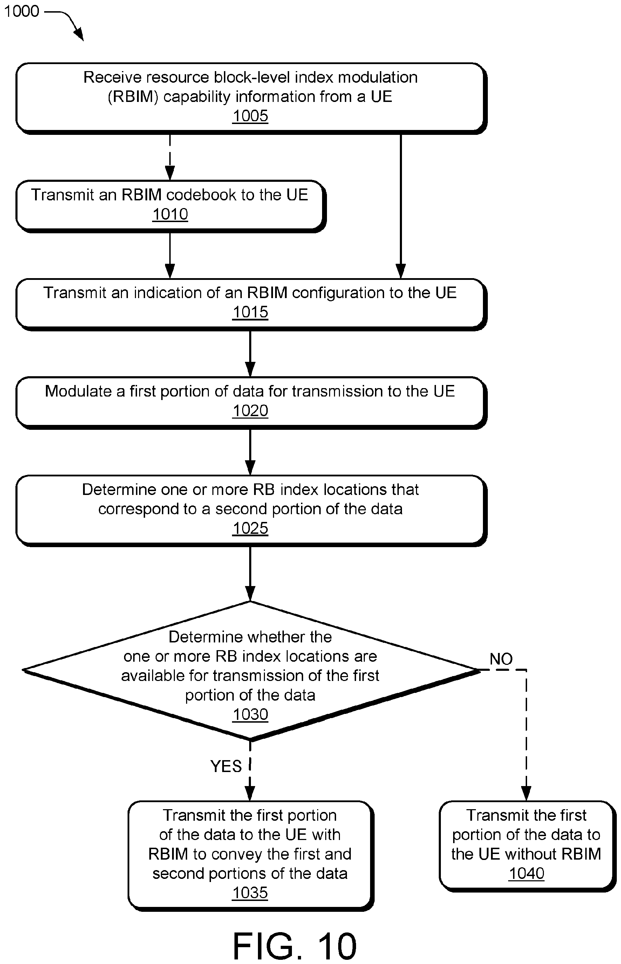

FIG. 10 illustrates example method 1000 for transmitting data to a user equipment with RBIM. In aspects, a base station (*e.g.*, base station 120) implements RBIM to convey additional information to a UE (*e.g.,* UE 110) by selectively scheduling RBs at a scheduling or MAC layer of an air interface between the base station and the UE. By so doing, the base station can improve spectral efficiency of a wireless network, particularly when transmitting small amounts of data to a large number of UEs.

At 1005, a base station (*e.g.* base station 121) receives RBIM capability information from a UE (*e.g.,* UE 111, UE 112, UE 113, or UE 114). The capability information of the UE may indicate that the UE is RBIM-capable, an RBIM region setting of the UE, an RBIM codebook accessible to the UE, a currently selected RBIM table of the UE, or the like. In some cases, the base station receives the RBIM capability information from the UE as a UE_CapabilityInformation IE that indicates one or more capabilities specific to RBIM.

Optionally at 1010, the base station transmits an RBIM codebook to the UE. For example, if the UE does not have an RBIM codebook or has an RBIM codebook that has been deprecated, the base station may send the RBIM codebook or an RBIM table to the UE for use in RBIM operations.

At 1015, the base station transmits an indication of an RBIM configuration to the UE. Based on the RBIM capability information of the UE, the base station may determine the RBIM configuration for the UE. For example, the base station may select an RBIM region for the UE and an RBIM table for the UE to use in decoding operations of RBIM-enabled downlink communications. In aspects, the base station and UE exchange respective messages for the RBIM capability information of the UE and the RBIM configuration for the UE as RRC messages to establish and/or configure RBIM settings for the UE.

At 1020, the base station modulates a first portion of data for transmission to the UE. In some cases, the base station modulates a first number of coded bits or bits of information that are pending transmission to the UE. Generally, the base station modulates the first portion of data at the PHY layer as modulation symbols or signal constellations, which can be scheduled to one or more resource blocks for transmission to the UE in a downlink communication.

At 1025, the base station determines one or more RB index locations that correspond to a second portion of the data. In aspects, the base station selects, based on an RBIM codebook or RBIM table, the one or more RB index locations within the RBIM region assigned to the UE that correspond to a bit value or data value of the second portion of the data. For example, based on coded bits of the second portion of the data (*e.g.,* [101]), the base station selects an index location for a resource block that correspond to the bit values in accordance with the RBIM table (*e.g.*, RB5 of FIG. 5).

At 1030, the base station determines whether the one or more RB index locations are available for transmission of the first portion of the data. The base station may determine whether the one or more RB index locations of the RBIM region are available for scheduling the PHY layer modulation symbols or constellation signals. As described herein, when scheduling RBs for multiple UEs that implement RBIM, the base station may have scheduling conflicts for particular index locations and may disable RBIM for one of the UEs during a current slot or subframe.

At 1035, the base station transmits the first portion of the data to the UE with RBIM to convey the first portion of the data and the second portion of the data. By transmitting the modulation symbols or constellation signals of the first portion of the data using RBs at the index locations selected in accordance with RBIM, the base station is able to convey the second portion of the data to the UE via the scheduling or MAC layer. By so doing, the base station is able to convey the additional information to the UE without consuming more air interface resources, which can improve spectral efficiency of communication between the base station and the UE.

At 1040, the base station transmits the first portion of the data to the UE without RBIM to convey the first portion of the data to the UE. As described with respect to operation 1030, the base station may not be able to schedule the PHY layer modulation symbols or constellation signals in the corresponding RB index locations for RBIM. In such cases, the base station may transmit the first portion of the data to the UE without RBIM and/or transmit additional data to the UE during another slot or subframe. Alternatively or additionally, the base station may be able to encode all data pending transmission to the UE (*e.g.,* for a current slot or subframe) at the PHY layer, thereby obviating the need to implement RBIM in the current frame or time slot.

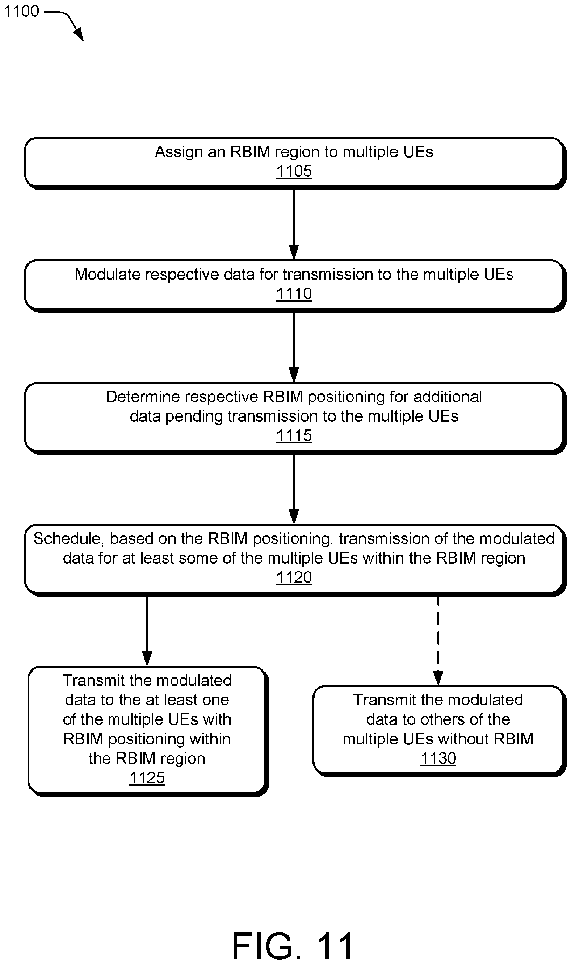

FIG. 11 illustrates example method 1100 for transmitting data to multiple user equipment with resource block-level index modulation. In aspects, a base station (*e.g.*, base station 120) communicates RBIM-enabled downlink data to multiple UEs (*e.g.*, UEs 110). By so doing, the base station may convey an increased amount of data or information to at least two UEs of an RBIM region, which can be useful to increase spectral efficiency when transmitting small amounts of data to multiple UEs (*e.g.*, deployments of IoT devices).

At 1105, a base station (*e.g.* base station 121) assigns an RBIM region to multiple UEs (*e.g.*, UE 111, UE 112, UE 113, or UE 114). The base station may select the UEs to which the RBIM region is assigned based on respective data pending transmission to the UEs. For example, the base station may select a group of multiple UEs with different combinations of coded bits pending transmission (*e.g.*, [101], [010] and [011]), such that corresponding index locations in the RBIM region are available to use RBIM with one or more of the multiple UEs. Alternatively or additionally, the base station may reselect the UEs for the RBIM region dynamically, such as on a slot basis, subframe basis, or frame basis.

At 1110, the base station modulates respective data for transmission to the multiple UEs. Generally, the base station may modulate, for each of the multiple UEs, a first number of coded bits that are pending transmission to the UE. Generally, the base station modulates respective data of the UEs at the PHY layer to provide modulation symbols or signal constellations. The base station may use any suitable type of modulation to modulate the data, such as BPSK, BFSK, QAM, 16QAM, 64QAM, 256QAM, 1024QAM, and so forth.

At 1115, the base station determines respective RBIM positioning for additional data pending transmission to the multiple UEs. The base station may determine the RBIM positioning as RB index locations based on bit values of the additional data and an RBIM table that maps bit values to corresponding RB index locations/combinations. When the base station does not have additional data to send one of the UEs, the base station may schedule an RB for that UE in any unoccupied RB of the RB region (*e.g.,* after scheduling RBIM-enabled downlink communications) or in an RB outside of the RB region.

At 1120, the base station schedules, based on the RBIM positioning, transmission of the modulated data for at least some of the multiple UEs within the RBIM region. Based on the respective RBIM positioning for the multiple UEs, the base station may determine if the respective index locations are available to use for transmitting the modulation symbols or constellation signals to the UEs. When a corresponding RB index location is unavailable, the base station may disable RBIM for one or more of the multiple UEs due to scheduling conflicts for the same index location.

At 1125, the base station transmits the respective modulated data to at least one of the multiple UEs with RBIM positioning within the RBIM region. By transmitting the modulation symbols or constellation signals with RBIM positioning, the base station is able to convey the additional information to the UEs via the scheduling layer or MAC layer of the air interface. By so doing, the base station is able to convey the additional information to at least some of the multiple UEs without consuming more PHY layer air interface resources, which can improve spectral efficiency of communication between the base station and the UE.

At 1130, the base station transmits the respective modulated data to others of the multiple UEs without RBIM positioning. As described with respect to operation 1120, the base station may not be able to schedule the PHY layer modulation symbols or constellation signals for all of the UEs in the corresponding RB index locations for RBIM. In such cases, the base station may transmit the first portion of the data to the UE without RBIM and/or transmit additional data to the UE during another slot or subframe.

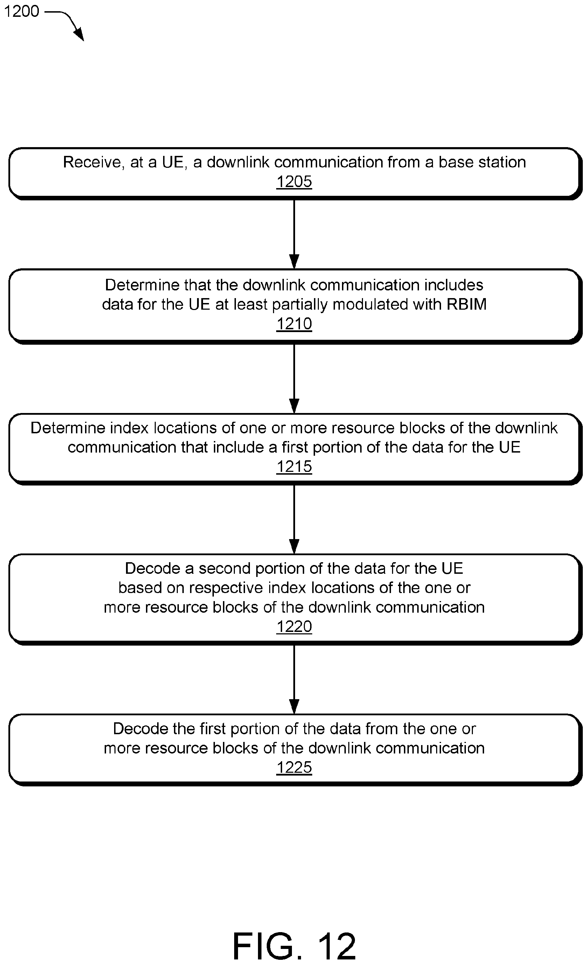

FIG. 12 illustrates example method 1200 for decoding a downlink communication that includes data modulated in accordance with aspects of resource block-level index modulation.

At 1205, a UE (*e.g.,* UE 111, UE 112, UE 113, or UE 114) receives a downlink communication from a base station (*e.g.*, base station 121). The downlink communication may include an indication that the data for the UE is at least partially modulated with RBIM. In aspects, the indication is received in the PDCCH of the downlink communication, and the data modulated with RBIM is received in the PDSCH of the downlink communication. The data of the downlink may include a first portion modulated at the PHY layer as constellation signals and a second portion of RBIM data that the base station modulates at the scheduling layer or MAC layer of a wireless link between the UE and the base station.

At 1210, the UE determines that the downlink includes data modulated with RBIM. For example, the UE may determine that the downlink communication includes the data at least partially modulated with RBIM based on the PDCCH indication received from the base station. At 1215, the UE determines index locations for one or more resource blocks of the downlink communication that include a first portion of data for the UE. Based on scheduling of the resource blocks by the base station, the UE can determine the index locations of the resource blocks that include PHY layer data (*e.g.*, constellation signals) for the UE.

At 1220, the UE decodes the second portion of the data for the UE based on respective index locations of the one or more resource blocks of the downlink communication. The UE may decode the index locations of the resource blocks using an RBIM table or RBIM codebook assigned to the UE by the base station. In aspects, the UE may receive, from the base station, the RBIM codebook or an indication of an RBIM codebook or RBIM table to use when decoding the second portion of the data. At 1225, the UE decodes the first portion of the data from the one or more resource blocks of the downlink communication. For example, the UE can decode the modulation symbols or constellation signals from the resource blocks to obtain the first portion of the data. The UE may then combine the first portion of the data and the second portion of the data to reconstruct the data received via the downlink communication from the base station.

FIG. 13 illustrates example method 1300 for resource block-level index modulation (RBIM) as generally related to transmitting data to a base station. In aspects, a UE (*e.g.*, UE 110, can use RBIM to convey, in addition to PHY layer-encoded data, bits of information to a base station (*e.g.,* base station 120) using the scheduling layer or MAC layer of an air interface. By so doing, the UE (*e.g.,* IoT device ) may improve spectral efficiency of a wireless communication, for example, when a large number of UEs transmit small amounts of respective data to a base station.

At 1305, a UE (*e.g.*, UE 111, UE 112, UE 113, or UE 114) determines data for transmission to a base station (*e.g.*, base station 121). The UE may process, queue, or buffer data pending transmission to the base station. For example, the UE can encode user data to provide coded bits of data for transmission to the base station. In some cases, the data include coded bits that form a codeword of data or information that is intended for transmission to the base station. If RBIM is available, the UE will have a stored uplink RBIM codebook to determine whether a portion of the data (i.e., a second portion) may be conveyed using an uplink RBIM scheme.

At 1310, the UE determines whether an uplink RBIM codebook 218 is available for transmitting the second portion of the data. The uplink RBIM codebook may be pre-stored at the UE or transferred as part of an RBIM codebook per 720. For example, if an uplink RBIM table in the RBIM codebook corresponds to the block of RBs that the base station allocated to the UE for uplink communications, then the flow proceeds to 1315. Otherwise, the UE proceeds to 1320 and transmits the first portion of the data to the base station without RBIM.

At 1315, the UE determines one or more RB index locations that correspond to the second portion of the data. In aspects, the UE selects, based on an RBIM codebook or RBIM table (*e.g.,* an RBIM codebook assigned to the UE by a base station), the one or more RB index locations within the RBIM region assigned to the UE that correspond to a bit value or data value of the second portion of the data. For example, based on coded bits of the second portion of the data (*e.g.,* [101]), the UE selects an index location for a resource block that correspond to the bit values in accordance with the RBIM table (*e.g.,* RB5 of FIG. 5).

At 1325, the UE determines whether the one or more RB index locations are available for transmission of the first portion of the data. Because the base station allocates uplink RBs to individual UEs, the UE experiences more constraints when scheduling data for an uplink RBIM scheme. The UE may determine whether the one or more RB index locations of the RBIM region are available (*e.g.*, assigned to the UE for uplink communication) for scheduling the PHY layer modulation symbols or constellation signals. When the one or more RB index locations are available, the flow proceeds to 1330. In some cases, the UE has scheduling conflicts for particular index locations and instead proceeds to 1320 to disable RBIM for an uplink communication to the base station during a current slot or subframe.

At 1330, the UE modulates a first portion of the data to provide modulation symbols that correspond to the first portion of the data. In some cases, the UE modulates a first number of coded bits that are pending transmission to the base station. Generally, the UE modulates the first portion of data at the PHY layer as modulation symbols or signal constellations. The UE may use any suitable type of modulation to modulate the first portion of the data, such as BPSK, BFSK, QAM, 16QAM, 64QAM, 256QAM, 1024QAM, and so forth.

Optionally at 1335, the UE indicates use of resource block-level index modulation to the base station. The UE may transmit an indication to the base station that the respective index locations of the one or more resource blocks are used to modulate the second portion of the data. In some cases, the UE transmits the indication using the PUCCH of a wireless link between the base station and the UE.

At 1340, the UE transmits the first portion of the data to the base station with RBIM to convey the first portion of the data and the second portion of the data. By transmitting the modulation symbols or constellation signals of the first portion of the data using RBs at the index locations selected in accordance with RBIM, the UE is able to convey the second portion of the data to the base station via the scheduling or MAC layer. By so doing, the UE is able to convey the additional information to the base station without consuming more air interface resources, which can improve spectral efficiency of communication between the UE and the base station.

At 1320, the UE modulates and transmits the first portion of the data to the base station without RBIM to convey the first portion of the data to the base station. Similar to that described with respect to operation 1030, the UE may not be able to schedule the PHY layer modulation symbols or constellation signals in the corresponding RB index locations for RBIM. In such cases, the UE may modulate and transmit the first portion of the data to the base station without RBIM and/or transmit additional data to the base station during another slot or subframe. Alternatively or additionally, the UE may be able to encode all data pending transmission to the base station (*e.g.*, for a current slot or subframe) at the PHY layer, thereby obviating the need to implement RBIM in the current frame or time slot.

The order in which the method blocks are described is not intended to be construed as a limitation, and any number of the described method blocks can be skipped or combined in any order to implement a method or an alternative method. Generally, any of the components, modules, methods, and operations described herein can be implemented using software, firmware, hardware (*e.g.,* fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-chip systems (SoCs), Complex Programmable Logic Devices (CPLDs), and the like.

The invention is defined by the appended claims 1-15.

**Claims**

1. A method performed by a wireless transmitter for resource block-level index modulation, the method comprising:

   determining data for transmission to a wireless receiver (110, 120);
   modulating a first portion of the data to provide modulation symbols that correspond to the first portion of the data;
   selecting, based on a data value of a second portion of the data, respective index locations for one or more resource blocks by which to transmit the modulation symbols to the wireless receiver;
   scheduling transmission of the modulation symbols in the one or more resource blocks having the respective index locations;
   transmitting an indication to the wireless receiver that the respective index locations of the one or more resource blocks indicate the second portion of the data; and
   transmitting the modulation symbols to the wireless receiver using the one or more resource blocks to convey the first portion of the data and the second portion of the data to the wireless receiver.

2. The method as recited in claim 1, wherein:

   transmitting the indication to the wireless receiver (110, 120) comprises transmitting the indication using a physical-layer control channel of a wireless link between the wireless transmitter and the wireless receiver;
   the physical-layer control channel comprises a physical downlink control channel, PDCCH;
   the indicator comprises a predefined indicator in the PDCCH; and
   the predefined indicator in the PDCCH is configured to selectively indicate when resource block-level index modulation is enabled for the wireless receiver in air interface resources of a physical downlink shared data channel, PDSCH, of the wireless link that correspond to the PDCCH.

3. The method as recited in claim 2, wherein:
   transmitting the modulation symbols using the one or more resource blocks comprises transmitting the modulation symbols using the PDSCH of the wireless link between the wireless transmitter (110, 120) and the wireless receiver (110, 120).

4. The method as recited in any of claims 1 to 3, wherein:
   the modulating the first portion of the data comprises:

   modulating the first portion of the data at a physical, PHY, layer of an air interface that extends between the wireless transmitter (110, 120) and the wireless receiver (110, 120); and
   the scheduling the transmission of the modulation symbols in the one or more resource blocks having the respective index locations is effective to modulate the second portion of the data at a media access control, MAC, layer of the air interface that extends between the wireless transmitter and the wireless receiver.

5. The method as recited in any of claims 1 to 4, further comprising:

   transmitting a first radio resource control, RRC, message comprising a resource block-level index modulation, RBIM, configuration to the wireless receiver (110, 120) that is used to decode the second portion of the data; or receiving, from the wireless receiver, a second RRC message comprising a capabilityinformation information element, CapabilityInformation IE, that indicates one or more capabilities specific to RBIM, and determining the RBIM configuration for the wireless receiver based on the CapabilityInformation IE.

6. The method as recited in claim 5, wherein the RBIM configuration comprises an indication of:

    an RBIM region of resource blocks;
    an RBIM codebook; or
    an RBIM table.

7. The method as recited in any of claims 1 to 6, wherein:
selecting the respective index locations of the one or more resource blocks comprises selecting the respective index locations from an RBIM region and/or the RBIM region comprises:

    one or more resource block groups of time-frequency resources of a downlink communication;
    one or more resource block groups of time-frequency resources of an uplink communication;
    a set of consecutive resource blocks of at least one of a slot, a subframe, or a frame of time-frequency resources of a downlink communication;
    a set of consecutive resource blocks of at least one of a slot, a subframe, or a frame of time-frequency resources of an uplink communication;
    a set of non-consecutive resource blocks of at least one of a slot, a subframe, or a frame of time-frequency resources of a downlink communication; or
    a set of non-consecutive resource blocks of at least one of a slot, a subframe, or a frame of time-frequency resources of an uplink communication.

8. A method performed by a wireless receiver (110, 120) for resource block-level index modulation, the method comprising:

    receiving a communication from a wireless transmitter (110, 120), the communication comprising an indication that index locations of resource blocks of the communication indicate data to the wireless receiver;
    determining, based on the indication, that the communication includes data for the wireless receiver that is at least partially modulated with resource block-level index modulation, RBIM;
    determining respective index locations for one or more resource blocks of the communication that include a first portion of the data for the wireless receiver;
    decoding a second portion of the data for the wireless receiver based on the respective index locations of the one or more resource blocks of the communication; and
    decoding the first portion of the data for the wireless receiver from the one or more resource blocks of the communication.

9. The method as recited in claim 8, wherein:

    wherein the receiving the indication comprises receiving the indication using a physical-layer control channel of a wireless link between the wireless receiver (110, 120) and the wireless transmitter (110, 120);
    the physical-layer control channel comprises a physical downlink control channel, PDCCH,;
    the indicator comprises a predefined indicator in the PDCCH; and
    the predefined indicator in the PDCCH is configured to selectively indicate when resource block-level index modulation is enabled for the wireless receiver in air interface resources of a physical downlink shared data channel, PDSCH, of the wireless link that correspond to the PDCCH.

10. The method as recited in claim 8 or claim 9, wherein the receiving the communication comprises receiving signals on one or more resource blocks using the PDSCH of the wireless link between the wireless receiver (110, 120) and the wireless transmitter (110, 120).

11. The method as recited in any of claims 8 to 10, further comprising:
transmitting, to the wireless transmitter (110, 120), a radio resource control, RRC, message comprising a capability-information information element, CapabilityInformation IE, that indicates one or more capabilities specific to RBIM.

**12.** The method as recited in any of claims 8 to 11, further comprising:
receiving, from the wireless transmitter (110, 120), an RBIM configuration that is useful to decode the second portion of the data that is modulated with RBIM.

**13.** The method as recited in claim 12, wherein the RBIM configuration comprises an indication of:

an RBIM region of resource blocks;
an RBIM codebook; or
an RBIM table.

**14.** An apparatus comprising:

at least one wireless transceiver (210, 260);
at least one processor (212, 262); and
computer-readable storage media comprising instructions that, responsive to execution by the at least one processor, direct the apparatus to perform any one of the methods of claims 1 to 13.

**15.** A computer-readable storage media comprising instructions that, responsive to execution by a processor, cause a method as recited in any one of claims 1 to 13 to be performed.


**Patentansprüche**

**1.** Verfahren zur Indexmodulation auf Ressourcenblockebene, durchgeführt durch einen drahtlosen Sender, wobei das Verfahren Folgendes umfasst:

Bestimmen von Daten zur Übertragung zu einem drahtlosen Empfänger (110, 120);
Modulieren eines ersten Abschnitts der Daten, um Modulationssymbole bereitzustellen, die dem ersten Abschnitt der Daten entsprechen;
auf der Grundlage eines Datenwerts eines zweiten Abschnitts der Daten erfolgendes Auswählen jeweiliger Indexpositionen für einen oder mehrere Ressourcenblöcke, durch welche die Modulationssymbole zu dem drahtlosen Empfänger übertragen werden sollen;
Planen der Übertragung der Modulationssymbole in dem einen oder den mehreren Ressourcenblöcken mit den jeweiligen Indexpositionen;
Übertragen einer Angabe zu dem drahtlosen Empfänger, dass die jeweiligen Indexpositionen des einen oder der mehreren Ressourcenblöcke den zweiten Abschnitt der Daten angeben; und
Übertragen der Modulationssymbole zu dem drahtlosen Empfänger unter Verwendung des einen oder der mehreren Ressourcenblöcke, um den ersten Abschnitt der Daten und den zweiten Abschnitt der Daten zu dem drahtlosen Empfänger zu befördern.

**2.** Verfahren nach Anspruch 1, wobei:

das Übertragen der Angabe zu dem drahtlosen Empfänger (110, 120) das Übertragen der Angabe unter Verwendung eines Bitübertragungsschicht-Steuerkanals einer drahtlosen Verbindung zwischen dem drahtlosen Sender und dem drahtlosen Empfänger umfasst;
der Bitübertragungsschicht-Steuerkanal einen physischen Abwärtsstrecken-Steuerkanal, PDCCH, umfasst;
der Indikator einen vordefinierten Indikator im PDCCH umfasst; und
der vordefinierte Indikator im PDCCH dafür konfiguriert ist, selektiv anzugeben, wann Indexmodulation auf Ressourcenblockebene für den drahtlosen Empfänger in Luftschnittstellenressourcen eines gemeinsam genutzten physischen Abwärtsstrecken-Datenkanals, PDSCH, der drahtlosen Verbindung, die dem PDCCH entsprechen, aktiviert ist.

**3.** Verfahren nach Anspruch 2, wobei:
das Übertragen der Modulationssymbole unter Verwendung des einen oder der mehreren Ressourcenblöcke das Übertragen der Modulationssymbole unter Verwendung des PDSCH der drahtlosen Verbindung zwischen dem drahtlosen Sender (110, 120) und dem drahtlosen Empfänger (110, 120) umfasst.

**4.** Verfahren nach einem der Ansprüche 1 bis 3, wobei:

die Modulation des ersten Abschnitts der Daten Folgendes umfasst:

Modulieren des ersten Abschnitts der Daten auf einer Bitübertragungsschicht, PHY, einer Luftschnittstelle, die sich zwischen dem drahtlosen Sender (110, 120) und dem drahtlosen Empfänger (110, 120) erstreckt; und das Planen der Übertragung der Modulationssymbole in dem einen oder den mehreren Ressourcenblöcken mit den jeweiligen Indexpositionen bewirkt, dass der zweite Abschnitt der Daten an einer Schicht der Medienzugriffssteuerung, MAC, der Luftschnittstelle, die sich zwischen dem drahtlosen Sender und dem drahtlosen Empfänger erstreckt, moduliert wird.

5. Verfahren nach einem der Ansprüche 1 bis 4, ferner Folgendes umfassend:

Übertragen einer ersten Nachricht der Funkressourcensteuerung, RRC, die eine Konfiguration der Indexmodulation auf Ressourcenblockebene, RBIM, umfasst, zu dem drahtlosen Empfänger (110, 120), der dafür verwendet wird, den zweiten Abschnitt der Daten zu decodieren; oder

Empfangen einer zweiten RRC-Nachricht von dem drahtlosen Empfänger, die ein Fähigkeitsinformation-Informationselement, CapabilityInformation IE, umfasst, das eine oder mehrere RBIM-spezifische Fähigkeiten angibt, und Bestimmen der RBIM-Konfiguration für den drahtlosen Empfänger auf der Grundlage des CapabilityInformation IE.

6. Verfahren nach Anspruch 5, wobei die RBIM-Konfiguration eine Angabe von Folgendem umfasst:

ein RBIM-Bereich von Ressourcenblöcken;
ein RBIM-Codebuch; oder
eine RBIM-Tabelle.

7. Verfahren nach einem der Ansprüche 1 bis 6, wobei:
das Auswählen der jeweiligen Indexpositionen des einen oder der mehreren Ressourcenblöcke das Auswählen der jeweiligen Indexpositionen aus einem RBIM-Bereich umfasst und/oder der RBIM-Bereich Folgendes umfasst:

eine oder mehrere Ressourcenblockgruppen von Zeit-Frequenz-Ressourcen einer Abwärtsstreckenkommunikation;
eine oder mehrere Ressourcenblockgruppen von Zeit-Frequenz-Ressourcen einer Aufwärtsstreckenkommunikation;
eine Menge von aufeinanderfolgenden Ressourcenblöcken von mindestens einem von einem Schlitz, einem Teilrahmen oder einem Rahmen von Zeit-Frequenz-Ressourcen einer Abwärtsstreckenkommunikation;
eine Menge von aufeinanderfolgenden Ressourcenblöcken von mindestens einem von einem Schlitz, einem Teilrahmen oder einem Rahmen von Zeit-Frequenz-Ressourcen einer Aufwärtsstreckenkommunikation;
eine Menge von nicht aufeinanderfolgenden Ressourcenblöcken von mindestens einem von einem Schlitz, einem Teilrahmen oder einem Rahmen von Zeit-Frequenz-Ressourcen einer Abwärtsstreckenkommunikation; oder
eine Menge von nicht aufeinanderfolgenden Ressourcenblöcken von mindestens einem von einem Schlitz, einem Teilrahmen oder einem Rahmen von Zeit-Frequenz-Ressourcen einer Aufwärtsstreckenkommunikation.

8. Verfahren zur Indexmodulation auf Ressourcenblockebene, durchgeführt durch einen drahtlosen Empfänger (110, 120), wobei das Verfahren Folgendes umfasst:

Empfangen einer Kommunikation von einem drahtlosen Sender (110, 120), wobei die Kommunikation eine Angabe umfasst, dass Indexpositionen von Ressourcenblöcken der Kommunikation Daten für den drahtlosen Empfänger angeben;
Bestimmen auf der Grundlage der Angabe, dass die Kommunikation Daten für den drahtlosen Empfänger einschließt, die mindestens teilweise mit Indexmodulation auf Ressourcenblockebene, RBIM, moduliert sind;
Bestimmen jeweiliger Indexpositionen für einen oder mehrere Ressourcenblöcke der Kommunikation, die einen ersten Abschnitt der Daten für den drahtlosen Empfänger einschließen;
Decodieren eines zweiten Abschnitts der Daten für den drahtlosen Empfänger auf der Grundlage der jeweiligen Indexpositionen des einen oder der mehreren Ressourcenblöcke der Kommunikation; und
Decodieren des ersten Abschnitts der Daten für den drahtlosen Empfänger aus dem einen oder den mehreren Ressourcenblöcken der Kommunikation.

9. Verfahren nach Anspruch 8, wobei:

wobei das Empfangen der Angabe das Empfangen der Angabe unter Verwendung eines Bitübertragungsschicht-Steuerkanals einer drahtlosen Verbindung zwischen dem drahtlosen Empfänger (110, 120) und dem drahtlosen Sender (110, 120) umfasst;
der Bitübertragungsschicht-Steuerkanal einen physischen Abwärtsstrecken-Steuerkanal, PDCCH, umfasst;
der Indikator einen vordefinierten Indikator im PDCCH umfasst; und
der vordefinierte Indikator im PDCCH dafür konfiguriert ist, selektiv anzugeben, wann Indexmodulation auf Ressourcenblockebene für den drahtlosen Empfänger in Luftschnittstellenressourcen eines gemeinsam genutzten physischen Abwärtsstrecken-Datenkanals, PDSCH, der drahtlosen Verbindung, die dem PDCCH entsprechen, aktiviert ist.

10. Verfahren nach Anspruch 8 oder Anspruch 9, wobei das Empfangen der Kommunikation das Empfangen von Signalen auf einem oder mehreren Ressourcenblöcken unter Verwendung des PDSCH der drahtlosen Verbindung zwischen dem drahtlosen Empfänger (110, 120) und dem drahtlosen Sender (110, 120) umfasst.

11. Verfahren nach einem der Ansprüche 8 bis 10, ferner Folgendes umfassend:
Übertragen einer Nachricht der Funkressourcensteuerung, RRC, zu dem drahtlosen Sender (110, 120), die ein Fähigkeitsinformation-Informationselement, CapabilityInformation IE, umfasst, das eine oder mehrere RBIM-spezifische Fähigkeiten angibt.

12. Verfahren nach einem der Ansprüche 8 bis 11, ferner Folgendes umfassend:
Empfangen einer RBIM-Konfiguration von dem drahtlosen Sender (110, 120), die nützlich ist, um den zweiten Abschnitt der Daten zu decodieren, der mit der RBIM moduliert ist.

13. Verfahren nach Anspruch 12, wobei die RBIM-Konfiguration eine Angabe von Folgendem umfasst:

ein RBIM-Bereich von Ressourcenblöcken;
ein RBIM-Codebuch; oder
eine RBIM-Tabelle.

14. Vorrichtung, Folgendes umfassend:

mindestens einen drahtlosen Sendeempfänger (210, 260);
mindestens einen Prozessor (212, 262); und
computerlesbares Speichermedium, das Anweisungen umfasst, die als Antwort auf die Ausführung durch den mindestens einen Prozessor die Vorrichtung anweisen, eines der Verfahren der Ansprüche 1 bis 13 durchzuführen.

15. Computerlesbares Speichermedium, Anweisungen umfassend, die als Antwort auf die Ausführung durch einen Prozessor bewirken, dass ein Verfahren nach einem der Ansprüche 1 bis 13 durchgeführt wird.


**Revendications**

1. Procédé réalisé par un émetteur sans fil pour une modulation d'index de niveau de blocs de ressources, le procédé comprenant :

la détermination de données pour leur transmission à un récepteur sans fil (110, 120) ;
la modulation d'une première partie des données pour produire des symboles de modulation qui correspondent à la première partie des données ;
la sélection, sur la base d'une valeur de données d'une deuxième partie des données, de localisations d'index respectives pour un ou plusieurs blocs de ressources permettant de transmettre les symboles de modulation au récepteur sans fil ;
la planification de la transmission des symboles de modulation dans les un ou plusieurs blocs de ressources présentant les localisations d'index respectives ;
la transmission d'une indication au récepteur sans fil du fait que les localisations d'index respectives des un ou plusieurs blocs de ressources indiquent la deuxième partie des données ; et

la transmission des symboles de modulation au récepteur sans fil en utilisant les un ou plusieurs blocs de ressources pour acheminer la première partie des données et la deuxième partie des données au récepteur sans fil.

2. Procédé selon la revendication 1, dans lequel :

la transmission de l'indication au récepteur sans fil (110, 120) comprend la transmission de l'indication en utilisant un canal de commande de couche physique d'une liaison sans fil entre l'émetteur sans fil et le récepteur sans fil ;
le canal de commande de couche physique comprend un canal de commande de liaison descendante physique, PDCCH ;
l'indicateur comprend un indicateur prédéfini dans le PDCCH ; et
l'indicateur prédéfini dans le PDCCH est configuré pour indiquer sélectivement lorsqu'une modulation d'index du niveau blocs de ressources est activée pour le récepteur sans fil dans des ressources d'interface hertzienne d'un canal de données partagé de liaison descendante physique, PDSCH, de la liaison sans fil qui correspondent au PDCCH.

3. Procédé selon la revendication 2, dans lequel :
la transmission des symboles de modulation en utilisant les un ou plusieurs blocs de ressources comprend la transmission des symboles de modulation en utilisant le PDSCH de la liaison sans fil entre l'émetteur sans fil (110, 120) et le récepteur sans fil (110, 120).

4. Procédé selon l'une quelconque des revendications 1 à 3, dans lequel :
la modulation de la première partie des données comprend :

la modulation de la première partie des données au niveau d'une couche physique, PHY, d'une interface hertzienne qui s'étend entre l'émetteur sans fil (110, 120) et le récepteurs sans fil (110, 120) ; et
la planification de la transmission des symboles de modulation dans les un ou plusieurs blocs de ressources présentant les localisations d'index respectives est effective pour moduler la deuxième partie des données au niveau d'une couche de commande d'accès au support, MAC, de l'interface hertzienne qui s'étend entre l'émetteur sans fil et le récepteur sans fil.

5. Procédé selon l'une quelconque des revendications 1 à 4, comprenant en outre :

la transmission d'un premier message de commande de ressources radio, RRC, comprenant une configuration de modulation d'index de niveau de blocs de ressources, RBIM, au récepteur sans fil (110, 120) qui est utilisé pour décoder la deuxième partie des données ; ou
la réception, en provenance du récepteur sans fil, d'un deuxième message RRC comprenant un élément informationnel d'information de capacité(s), CapabilityInformation IE, qui indique une ou plusieurs capacités spécifiques à la RBIM, et la détermination de la configuration de RBIM pour le récepteur sans fil sur la base de CapabilityInformation IE.

6. Procédé selon la revendication 5, dans lequel la configuration de RBIM comprend une indication :

d'une région de RBIM de blocs de ressources ;
d'un livre de code de RBIM ; ou
d'une table de RBIM.

7. Procédé selon l'une quelconque des revendications 1 à 6, dans lequel :
la sélection des localisations d'index respectives des un ou plusieurs blocs de ressources comprend la sélection des localisations d'index respectives à partir d'une région de RBIM et/ou la région de RBIM comprend :

un ou plusieurs groupes de blocs de ressources constitués par des ressources temps-fréquence d'une communication de liaison descendante ;
un ou plusieurs groupes de blocs de ressources constitués par des ressources temps-fréquence d'une communication de liaison montante ;
un ensemble de blocs de ressources consécutifs d'au moins une parmi une fenêtre temporelle, une sous-trame et une trame de ressources temps-fréquence d'une communication de liaison descendante ;

un ensemble de blocs de ressources consécutifs d'au moins une parmi une fenêtre temporelle, une sous-trame et une trame de ressources temps-fréquence d'une communication de liaison montante ;
un ensemble de blocs de ressources non consécutifs d'au moins une parmi une fenêtre temporelle, une sous-trame et une trame de ressources temps-fréquence d'une communication de liaison descendante ; ou
un ensemble de blocs de ressources non consécutifs d'au moins une parmi une fenêtre temporelle, une sous-trame et une trame de ressources temps-fréquence d'une communication de liaison montante.

8. Procédé réalisé par un récepteur sans fil (110, 120) pour une modulation d'index de niveau de blocs de ressources, le procédé comprenant :

la réception d'une communication provenant d'un émetteur sans fil (110, 120), la communication comprenant une indication du fait que des localisations d'index de blocs de ressources de la communication indiquent des données au récepteur sans fil ;
la détermination, sur la base de l'indication, du fait que la communication inclut des données pour le récepteur sans fil qui sont au moins partiellement modulées à l'aide d'une modulation d'index du niveau blocs de ressources, RBIM ;
la détermination de localisations d'index respectives pour un ou plusieurs blocs de ressources de la communication qui incluent une première partie des données pour le récepteur sans fil ;
le décodage d'une deuxième partie des données pour le récepteur sans fil sur la base des localisations d'index respectives des un ou plusieurs blocs de ressources de la communication ; et
le décodage de la première partie des données pour le récepteur sans fil à partir des un ou plusieurs blocs de ressources de la communication.

9. Procédé selon la revendication 8, dans lequel :

dans lequel la réception de l'indication comprend la réception de l'indication en utilisant un canal de commande de couche physique d'une liaison sans fil entre le récepteur sans fil (110, 120) et l'émetteur sans fil (110, 120) ;
le canal de commande de couche physique comprend un canal de commande de liaison descendante physique, PDCCH ;
l'indicateur comprend un indicateur prédéfini dans le PDCCH ; et
l'indicateur prédéfini dans le PDCCH est configuré pour indiquer sélectivement lorsqu'une modulation d'index du niveau blocs de ressources est activée pour le récepteur sans fil dans des ressources d'interface hertzienne d'un canal de données partagé de liaison descendante physique, PDSCH, de la liaison sans fil qui correspondent au PDCCH.

10. Procédé selon la revendication 8 ou la revendication 9, dans lequel la réception de la communication comprend la réception de signaux sur un ou plusieurs blocs de ressources en utilisant le PDSCH de la liaison sans fil entre le récepteur sans fil (110, 120) et l'émetteur sans fil (110, 120).

11. Procédé selon l'une quelconque des revendications 8 à 10, comprenant en outre :
la transmission, sur l'émetteur sans fil (110, 120), d'un message de commande de ressources radio, RRC, comprenant un élément informationnel d'information de capacité(s), CapabilityInformation IE, qui indique une ou plusieurs capacités spécifiques à la RBIM.

12. Procédé selon l'une quelconque des revendications 8 à 11, comprenant en outre :
la réception, en provenance de l'émetteur sans fil (110, 120), d'une configuration de RBIM qui est utile pour décoder la deuxième partie des données qui est modulée à l'aide de la RBIM.

13. Procédé selon la revendication 12, dans lequel la configuration de RBIM comprend une indication :

d'une région de RBIM de blocs de ressources ;
d'un livre de code de RBIM ; ou
d'une table de RBIM.

14. Appareil comprenant :

au moins un émetteur-récepteur sans fil (210, 260) ;
au moins un processeur (212, 262) ; et

un support de stockage lisible par ordinateur comprenant des instructions qui, en réponse à leur exécution par l'au moins un processeur, dirigent l'appareil pour réaliser l'un quelconque des procédés des revendications 1 à 13.

15. Support de stockage lisible par ordinateur comprenant des instructions qui, en réponse à leur exécution par un processeur, provoquent la réalisation d'un procédé selon l'une quelconque des revendications 1 à 13.

FIG. 1

200 —

110 —

202 —

| RF Front End |
| 204 |

| Wireless Transceiver |
| 210 |

| Processor(s) |
| 212 |

Computer-Readable
Storage Media
214

| Device Data |
| 216 |

| UE RBIM Codebook |
| 218 |

RBIM Capability
Information
220

| RBIM Decoder |
| 222 |

— 120

— 252

| RF Front End |
| 254 |

| Wireless Transceiver(s) |
| 260 |

| Processor(s) |
| 262 |

Computer-Readable
Storage Media
264

| Device Data |
| 266 |

| Downlink Data |
| 268 |

| BS RBIM Codebook |
| 270 |

| RB Index Modulator |
| 272 |

| Base Station Manager |
| 274 |

| Inter-Base Station I/F |
| 276 |

| Core Network Interface |
| 278 |

# FIG. 2

FIG. 3

FIG. 4

500

120

110

UE RBIM Codebook
218

RBIM Table 1
502

RBIM Table 2
504

⋮

RBIM Table n
506

RB7
111

RB6
110

RB5
101

RB4
100

RB3
011

RB2
010

RB1
001

RB0
000

RBIM Table 2
504

BS RBIM Codebook
270

RBIM Table 1
502

RBIM Table 2
504

⋮

RBIM Table n
506

508

RB5
101 — — —

— [ 0 ]

[ 0 1 0 1 ]

512 510

# FIG. 5

FIG. 6

FIG. 7

800

| Base Station 121 | User Equipment 111 | User Equipment 112 | User Equipment 113 |

Establish RBIM configurations
730

Select UEs for RBIM region
805

Determine RB locations for RBIM
810

Enable/Disable RBIM for UEs
815

745

UE data with RBIM

745

UE data with RBIM

820

UE data without RBIM

| Decode RBIM bits 750 | Decode RBIM bits 750 | Decode UE data 825 |

| Decode UE data 755 | Decode UE data 755 |

FIG. 8

900 —

Determine data for transmission to a user equipment (UE)
905

Modulate a first portion of the data to provide modulation symbols that correspond to the first portion of the data
910

Select, based on a data value of a second portion of the data, respective index locations for one or more resource blocks by which to transmit the modulation symbols
915

Schedule transmission of the modulation symbols in the one or more resource blocks having the respective index locations
920

Indicate use of resource block-level modulation to the UE
925

Transmit the modulation symbols to the UE via the one or more resource blocks to convey the first portion of the data and the second portion of the data to the UE
930

FIG. 9

1000

Receive resource block-level index modulation
(RBIM) capability information from a UE
1005

Transmit an RBIM codebook to the UE
1010

Transmit an indication of an RBIM configuration to the UE
1015

Modulate a first portion of data for transmission to the UE
1020

Determine one or more RB index locations that
correspond to a second portion of the data
1025

Determine whether the
one or more RB index locations are
available for transmission of the first
portion of the data
1030

NO

YES

Transmit the first portion
of the data to the UE with
RBIM to convey the first and
second portions of the data
1035

Transmit the first
portion of the data to
the UE without RBIM
1040

FIG. 10

1100 ⟍

```
┌─────────────────────────────────────────────────────────────┐
│              Assign an RBIM region to multiple UEs           │
│                           1105                               │
└─────────────────────────────────────────────────────────────┘
                              │
                              ▼
┌─────────────────────────────────────────────────────────────┐
│    Modulate respective data for transmission to the multiple UEs │
│                           1110                               │
└─────────────────────────────────────────────────────────────┘
                              │
                              ▼
┌─────────────────────────────────────────────────────────────┐
│       Determine respective RBIM positioning for additional   │
│        data pending transmission to the multiple UEs         │
│                           1115                               │
└─────────────────────────────────────────────────────────────┘
                              │
                              ▼
┌─────────────────────────────────────────────────────────────┐
│  Schedule, based on the RBIM positioning, transmission of the modulated │
│    data for at least some of the multiple UEs within the RBIM region │
│                           1120                               │
└─────────────────────────────────────────────────────────────┘
                │                                    ┊
                ▼                                    ▼
┌──────────────────────────┐          ┌──────────────────────────┐
│   Transmit the modulated  │          │   Transmit the modulated  │
│  data to the at least one │          │    data to others of the  │
│  of the multiple UEs with │          │  multiple UEs without RBIM │
│   RBIM positioning within │          │           1130            │
│       the RBIM region     │          └──────────────────────────┘
│           1125            │
└──────────────────────────┘
```

# FIG. 11

1200

```
┌─────────────────────────────────────────────────────────┐
│     Receive, at a UE, a downlink communication from a     │
│                    base station                           │
│                        1205                               │
└─────────────────────────────────────────────────────────┘
                              │
                              ▼
┌─────────────────────────────────────────────────────────┐
│     Determine that the downlink communication includes    │
│   data for the UE at least partially modulated with RBIM  │
│                        1210                               │
└─────────────────────────────────────────────────────────┘
                              │
                              ▼
┌─────────────────────────────────────────────────────────┐
│  Determine index locations of one or more resource blocks │
│  of the downlink communication that include a first       │
│  portion of the data for the UE                           │
│                        1215                               │
└─────────────────────────────────────────────────────────┘
                              │
                              ▼
┌─────────────────────────────────────────────────────────┐
│       Decode a second portion of the data for the UE      │
│        based on respective index locations of the one or  │
│      more resource blocks of the downlink communication   │
│                        1220                               │
└─────────────────────────────────────────────────────────┘
                              │
                              ▼
┌─────────────────────────────────────────────────────────┐
│       Decode the first portion of the data from the one or │
│      more resource blocks of the downlink communication   │
│                        1225                               │
└─────────────────────────────────────────────────────────┘
```

FIG. 12

1300

Determine data for transmission to a base station
1305

Determine whether an uplink
RBIM codebook is available for transmitting
the second portion of the data
1310

NO

YES

Determine one or more RB index locations that
correspond to a second portion of the data
1315

Determine whether the
one or more RB index locations are
available for transmission of the first
portion of the data
1325

NO

YES

Modulate a first portion of the data to
provide modulation symbols that
correspond to the first portion of the data
1330

Indicate use of resource block-level
modulation to the base station
1335

Transmit the first portion of the data
to the base station with RBIM to convey
the first and second portions of the data
1340

Modulate and
transmit the first
portion of the data
to the base station
without RBIM
1320

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BASAR ERTUGRUL et al.** Orthogonal Frequency Division Multiplexing With Index Modulation. *IEEE TRANSACTIONS ON SIGNAL PROCESSING, USA,* vol. 61 (22
- **S. Y. NUSENU ; S. HUAIZONG ; Y. PAN ; A. BASIT.** Space-Frequency Increment Index Modulation Approach for Fifth Generation and Beyond Wireless Communication Systems. *IEEE Transactions on Vehicular Technology,* June 2020, vol. 69 (6), 6286-6298

- **E. SOUJERI ; G. KADDOUM ; M. AU ; M. HERCEG.** Frequency Index Modulation for Low Complexity Low Energy Communication Networks. *IEEE Access,* 2017, vol. 5, 23276-23287